(19) **Europäisches Patentamt / European Patent Office / Office européen des brevets**

(11) **EP 4 546 934 A1**

(12) **EUROPEAN PATENT APPLICATION**
published in accordance with Art. 153(4) EPC

(43) Date of publication:
**30.04.2025 Bulletin 2025/18**

(21) Application number: **23838608.0**

(22) Date of filing: **09.06.2023**

(51) International Patent Classification (IPC):
**H04W 76/11** (2018.01)

(52) Cooperative Patent Classification (CPC):
**H04W 52/02; H04W 76/11; H04W 76/28;
Y02D 30/70**

(86) International application number:
**PCT/CN2023/099368**

(87) International publication number:
**WO 2024/012114 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 CN 202210822488**

(71) Applicant: **Huawei Technologies Co., Ltd.
Shenzhen, Guangdong 518129 (CN)**

(72) Inventors:
- **WANG, Feng
  Shenzhen, Guangdong 518129 (CN)**
- **LUO, Zhihu
  Shenzhen, Guangdong 518129 (CN)**
- **JIN, Zhe
  Shenzhen, Guangdong 518129 (CN)**
- **XUE, Lixia
  Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **COMMUNICATION METHOD AND COMMUNICATION APPARATUS**

(57) A communication method and a communication apparatus are provided. The communication method includes: A first communication apparatus and a second communication apparatus determine a first identifier based on a second identifier, where a length of the first identifier is less than a length of the second identifier, and the second identifier is an identifier of the first communication apparatus. The second communication apparatus sends a first message; and correspondingly, the first communication apparatus receives the first message, where the first message includes the first identifier. The first communication apparatus wakes up. According to embodiments of this application, a quantity of bits occupied by the identifier of the first communication apparatus in the first message can be reduced, so that a capacity of the first message is increased, and the first message can be used to wake up more communication apparatuses.

FIG. 3

## Description

This application claims priority to Chinese Patent Application No. 202210822488.0, filed with the China National Intellectual Property Administration on July 13, 2022 and entitled "COMMUNICATION METHOD AND COMMUNICATION APPARATUS", which is incorporated herein by reference in its entirety.

## TECHNICAL FIELD

This application relates to the field of communication technologies, and in particular, to a communication method and a communication apparatus.

## BACKGROUND

In a communication network, a terminal device needs to wake up once in each discontinuous reception (discontinuous reception, DRX) cycle, to monitor, on a physical downlink control channel (physical downlink control channel, PDCCH), whether there is signaling and a data service for the terminal device. Wake-up once in each DRX cycle is main power consumption of the terminal device. When there is no signaling or data service, wake-up of the terminal device causes unnecessary power consumption.

In a power consumption reduction method, a wake-up radio/wake-up receiver (wake-up radio/wake-up receiver, WUR) module is designed, and a terminal device wakes up by using a WUR module only when being paged by a network device, thereby reducing energy consumption.

The terminal device includes a main radio and a secondary receiver (that is, a WUR module). The secondary receiver has a function of listening to a wake-up signal with ultra-low power consumption. After receiving the wake-up signal, the secondary receiver triggers wake-up of the main radio. When the main radio is turned on, the main radio may be used for signaling interaction and data service transmission. For a terminal device configured with a WUR module, when the network device and the terminal device have no data transmission requirement, a main radio of the terminal device is configured to be turned off or in deep sleep, and the WUR module may be in an active state or an intermittent active state, to implement energy saving of the terminal device through cooperation between the main radio and a secondary receiver.

Generally, the network device may wake up a plurality of terminal devices by using a wake-up signal, where the wake-up signal carries identification information of the plurality of terminal devices. The terminal device listens to the wake-up signal on a WUR link, and determines, based on the identification information carried in the wake-up signal, whether to wake up the main radio. However, in the wake-up process, because an identifier of the terminal device is long, the wake-up signal can carry a small quantity of identifiers of the terminal device, and consequently, the wake-up signal can be used to simultaneously wake up a small quantity of terminal devices.

## SUMMARY

Embodiments of this application disclose a communication method and a communication apparatus, to simultaneously wake up more communication apparatuses.

According to a first aspect, an embodiment of this application provides a communication method. The method may be performed by a first communication apparatus, or may be performed by a component (for example, a chip or a circuit) of the first communication apparatus. This is not limited herein. The method includes the following steps:
The first communication apparatus determines a first identifier based on a second identifier, where a length of the first identifier is less than a length of the second identifier, and the second identifier is an identifier of the first communication apparatus. The first communication apparatus receives a first message, where the first message includes the first identifier. The first communication apparatus wakes up.

In this embodiment of this application, the first communication apparatus determines the first identifier based on the second identifier, so that the first identifier can identify the first communication apparatus. The first message is used to wake up the first communication apparatus, the length of the first identifier is less than the length of the second identifier, and the first identifier identifies the first communication apparatus in the first message, to avoid directly carrying the second identifier in the first message, so that a quantity of bits occupied by the identifier of the first communication apparatus in the first message is reduced, and therefore the first message can accommodate identifiers of more communication apparatuses, that is, a capacity of the first message is increased, and the first message that carries the first identifier can be used to simultaneously wake up more communication apparatuses than a first message that carries the second identifier and that has a same length.

With reference to the first aspect, in a possible implementation, the first communication apparatus is a communication apparatus in a first group, and before the first communication apparatus receives the first message, the method further includes the following step:

The first communication apparatus receives first indication information, where the first indication information indicates the communication apparatus in the first group to receive the first message.

In this manner, a group to which the first communication apparatus belongs is the first group. Before receiving the first message, the first communication apparatus may indicate, by using the first indication information, the communication apparatus in the first group to receive the first message, to ensure that the first communication apparatus can receive the first message.

With reference to the first aspect, in a possible implementation, a value of the first indication information is a second value.

With reference to the first aspect, in a possible implementation, before the first communication apparatus receives the first indication information, the method further includes the following step:

The first communication apparatus receives second indication information, where the second indication information indicates the group to which the first communication apparatus belongs.

With reference to the first aspect, in a possible implementation, the method further includes the following step:
The first communication apparatus receives third indication information, where the third indication information indicates a communication apparatus in a second group to receive a paging message, and the first communication apparatus is not a communication apparatus in the second group, or the second communication apparatus does not belong to the second group.

In some implementations, the third indication information and the first indication information may be same indication information. In other words, the first indication information or the third indication information indicates the communication apparatus in the first group to receive the first message, and indicates the communication apparatus in the second group to receive the third indication information. The first communication apparatus receives the first indication information or the third indication information.

According to a second aspect, an embodiment of this application provides a communication method. The method may be performed by a first communication apparatus, or may be performed by a component (for example, a chip or a circuit) of the first communication apparatus. This is not limited herein. The method includes the following steps:
The first communication apparatus receives first indication information, where the first indication information indicates a communication apparatus in a first group to receive a first message and/or indicates a communication apparatus in a second group to receive a paging message; and receives the first message or the paging message based on a group to which the first communication apparatus belongs.

In this embodiment of this application, the first message is used to wake up the communication apparatus in the first group, and the paging message is used to page the communication apparatus in the second group. The first indication information may indicate the first communication apparatus to receive the first message or the paging message, to ensure that the first communication apparatus can receive the first message or the paging message. In addition, the paging message may be used to page the communication apparatus in the second group, and the first message is used to wake up the communication apparatus in the first group. When there are a large quantity of communication apparatuses that need to be woken up, more communication apparatuses can be simultaneously woken up without being limited by a capacity of the first message.

With reference to the second aspect, in a possible implementation, the receiving the first message or the paging message based on a group to which the first communication apparatus belongs includes:
receiving the first message when the group to which the first communication apparatus belongs is the first group; or receiving the paging message when the group to which the first communication apparatus belongs is the second group.

With reference to the second aspect, in a possible implementation, before the first communication apparatus receives the first indication information, the method further includes the following step:
The first communication apparatus receives second indication information, where the second indication information indicates the group to which the first communication apparatus belongs.

With reference to the second aspect, in a possible implementation, the method further includes the following steps:
The first communication apparatus determines a first identifier based on a second identifier, where a length of the first identifier is less than a length of the second identifier, and the second identifier is an identifier of the first communication apparatus. The first communication apparatus wakes up when the first message includes the first identifier.

In this embodiment of this application, the first identifier identifies the first communication apparatus in the first message, and the length of the first identifier is less than the length of the second identifier. The first identifier identifies the first communication apparatus in the first message, to avoid directly carrying the second identifier in the first message, so that a quantity of bits occupied by the identifier of the first communication apparatus in the first message is reduced, and therefore the first message can accommodate identifiers of more communication apparatuses, that is, a capacity of the first message is increased, and the first message that carries the first identifier can be used to wake up more communication apparatuses than a first message that carries the second identifier and that has a same length.

It may be understood that the first communication apparatus may first determine the first identifier based on the second identifier and then receive the first message, or may first receive the first message and then determine the first identifier based on the second identifier. This is not limited in this application.

With reference to the first aspect or the second aspect, in a possible implementation, that the first communication apparatus determines a first identifier based on a second identifier includes:

The first communication apparatus determines the first identifier based on a first partial identifier of the second identifier, where the first partial identifier is a partial identifier of the second identifier.

In this embodiment of this application, the first identifier may be determined based on the partial identifier of the second identifier, that is, the first identifier may be the first partial identifier, or may be calculated based on the first partial identifier. The first communication apparatus can determine the first identifier more quickly based on the first partial identifier, and can further reduce the length of the first identifier, thereby increasing a capacity of the first message.

With reference to the first aspect or the second aspect, in a possible implementation, that the first communication apparatus determines the first identifier based on a first partial identifier of the second identifier includes:

The first communication apparatus determines the first identifier based on a frame check sequence of the first partial identifier; the first communication apparatus determines the first identifier based on the first partial identifier and a random function; or the first communication apparatus determines the first identifier based on the first partial identifier and a hash function.

In this embodiment of this application, the first communication apparatus may determine the first identifier based on the frame check sequence of the first partial identifier. The first identifier can be quickly determined provided that the frame check sequence of the partial identifier of the second identifier is calculated. In addition, a probability that the first identifier of the first communication apparatus collides with a first identifier of another communication apparatus can be reduced, and reliability of the first identifier can be improved. The first communication apparatus may determine the first identifier based on the first partial identifier and the random function or the hash function. For example, the first communication apparatus may map the first partial identifier to the first identifier by using the random function or the hash, so that the length of the first identifier can be reduced; and only needs to input the partial identifier of the second identifier into the random function or the hash function, to reduce input lengths of the random function and the hash function, and reduce a probability that the first identifier of the first communication apparatus collides with a first identifier of another communication apparatus.

With reference to the first aspect or the second aspect, in a possible implementation, after the first communication apparatus wakes up, the method further includes the following step:

The first communication apparatus enters a random access procedure.

In this embodiment of this application, after waking up, the first communication apparatus may directly enter the random access procedure, so that a second communication apparatus establishes communication without receiving a paging message. This can reduce energy consumption of the first communication apparatus in a paging process, and improve efficiency of establishing communication between the first communication apparatus and the second communication apparatus.

With reference to the first aspect or the second aspect, in a possible implementation, that the first communication apparatus receives a first message includes:

The first communication apparatus determines a first monitoring occasion. The first communication apparatus receives the first message within the first monitoring occasion.

In this embodiment of this application, the first communication apparatus listens to and receives the first message within the first monitoring occasion by using a secondary receiver. It may be understood that the secondary receiver of the first communication apparatus is in an on state within the first monitoring occasion, and may be in an off state outside the first monitoring occasion, and does not need to keep listening to the first message, so that energy consumption of the first communication apparatus can be reduced.

With reference to the first aspect or the second aspect, in a possible implementation, that the first communication apparatus determines a first monitoring occasion includes:

The first communication apparatus determines the first monitoring occasion based on a third identifier, where the third identifier is determined based on the second identifier.

In this embodiment of this application, a length of the third identifier is less than the length of the second identifier, and the first communication apparatus can determine the first monitoring occasion more quickly based on the third identifier, thereby improving wake-up efficiency of the first communication apparatus.

According to a third aspect, an embodiment of this application provides a communication method, including the following steps:

A second communication apparatus determines a first identifier based on a second identifier, where a length of the first identifier is less than a length of the second identifier, and the second identifier is an identifier of a first communication apparatus. The second communication apparatus sends a first message, where the first message is used to wake up the first communication apparatus, and the first message includes the first identifier.

In this embodiment of this application, the length of the first identifier is less than the length of the second identifier, and the second communication apparatus determines the first identifier based on the second identifier, so that the first identifier can identify the first communication apparatus. The first message is used to wake up the first communication apparatus, and the first identifier identifies the first communication apparatus in the first message, so that a quantity of bits occupied by the identifier of the first communication apparatus in the first message is reduced, and therefore the first message can accommodate identifiers of more communication apparatuses, that is, a capacity of the first message is increased.

With reference to the third aspect, in a possible implementation, that a second communication apparatus determines a first identifier based on a second identifier includes:

The second communication apparatus determines the first identifier based on a first partial identifier of the second identifier, where the first partial identifier is a partial identifier of the second identifier.

In this embodiment of this application, the first identifier may be determined based on the partial identifier of the second identifier, that is, the first identifier may be the first partial identifier, or may be calculated based on the first partial identifier. The second communication apparatus can determine the first identifier more quickly based on the first partial identifier, and can further reduce the length of the first identifier, thereby increasing a capacity of the first message.

With reference to the third aspect, in a possible implementation, that the second communication apparatus determines the first identifier based on a first partial identifier of the second identifier includes:

The second communication apparatus determines the first identifier based on a frame check sequence of the first partial identifier; the second communication apparatus determines the first identifier based on the first partial identifier and a random function; or the second communication apparatus determines the first identifier based on the first partial identifier and a hash function.

In this embodiment of this application, the second communication apparatus may determine the first identifier based on the frame check sequence of the first partial identifier. The first identifier can be quickly determined provided that the frame check sequence of the partial identifier of the second identifier is calculated. In addition, a probability that the first identifier of the first communication apparatus collides with a first identifier of another communication apparatus can be reduced, and reliability of the first identifier can be improved. The second communication apparatus may determine the first identifier based on the first partial identifier and the random function or the hash function. For example, the second communication apparatus may map the first partial identifier to the first identifier by using the random function or the hash, so that the length of the first identifier can be reduced; and only needs to input the partial identifier of the second identifier into the random function or the hash function, to reduce input lengths of the random function and the hash function, and reduce a probability that the first identifier of the first communication apparatus collides with a first identifier of another communication apparatus.

With reference to the third aspect, in a possible implementation, the first communication apparatus is a communication apparatus in a first group, and before the second communication apparatus sends the first message, the method further includes the following step:

The second communication apparatus sends first indication information, where the first indication information indicates the communication apparatus in the first group to receive the first message.

In this embodiment of this application, the first message may be used to wake up the communication apparatus in the first group, and a group to which the first communication apparatus belongs is the first group. Before receiving the first message, the first communication apparatus may indicate, by using the first indication information, the first communication apparatus to receive the first message, to ensure that the first communication apparatus can receive the first message.

With reference to the third aspect, in a possible implementation, a value of the first indication information is a second value.

In this embodiment of this application, when the value of the first indication information is the second value, the second indication information indicates the communication apparatus in the first group to receive the first message. The value of the second indication information can more accurately indicate the first communication apparatus to receive the first message.

With reference to the third aspect, in a possible implementation, before the second communication apparatus sends the first indication information, the method further includes the following step:

The second communication apparatus sends second indication information, where the second indication information indicates the group to which the first communication apparatus belongs.

In this embodiment of this application, the second communication apparatus may determine the group to which the first communication apparatus belongs, and indicate, by using the second indication information, the group in which the first communication is located, so that the first communication apparatus can quickly determine, based on the second indication information, the group to which the first communication apparatus belongs.

With reference to the third aspect, in a possible implementation, the method further includes the following steps:
The second communication apparatus sends third indication information, where the third indication information indicates a communication apparatus in a second group to receive a paging message. The second communication apparatus sends the paging message.

In this embodiment of this application, the second communication apparatus may further indicate, by using the third indication information, the communication apparatus in the second group to receive the paging message, where the paging message is used to page the communication apparatus in the second group. The second communication apparatus may wake up the communication apparatus in the first group by using the first message, and page the communication apparatus in the second group by using the paging message. When there are a large quantity of communication apparatuses that need to be woken up, a delay of waking up the communication apparatus is reduced without being limited by a capacity of the first message.

With reference to the third aspect, in a possible implementation, that a second communication apparatus sends a first message includes:

The second communication apparatus determines a first monitoring occasion. The second communication apparatus sends the first message within the first monitoring occasion.

In this embodiment of this application, the first monitoring occasion is a monitoring occasion on which the first communication apparatus listens to the first message. The second communication apparatus determines the first monitoring occasion corresponding to the first communication apparatus, and sends the first message within the monitoring occasion, to ensure that the first communication apparatus receives the first message.

With reference to the third aspect, in a possible implementation, that the second communication apparatus determines a first monitoring occasion includes:

The second communication apparatus determines the first monitoring occasion based on a third identifier, where the third identifier is determined based on the second identifier.

In this embodiment of this application, a length of the third identifier is less than the length of the second identifier, and the second communication apparatus can determine the first monitoring occasion more quickly based on the third identifier.

With reference to the first aspect, the second aspect, or the third aspect, in a possible implementation, a difference between lengths of the first partial identifier and the second identifier is less than or equal to a first length, and the first length is related to a quantity of monitoring occasions in a wake-up period.

In this embodiment of this application, the wake-up period is a period in which the first communication apparatus monitors the first message, the monitoring occasion is an occasion on which the first communication apparatus monitors the first message, and the monitoring occasion may be a time period or a time domain location. The first communication apparatus may monitor a monitoring occasion in a wake-up period. One monitoring occasion may correspond to a plurality of communication apparatuses. A larger quantity of monitoring occasions in a wake-up period indicates a smaller quantity of communication apparatuses corresponding to one monitoring occasion. The first partial identifier identifies the first communication apparatus in the plurality of communication apparatuses corresponding to the monitoring occasion corresponding to the first communication apparatus. Therefore, the length of the first partial identifier is determined based on the quantity of monitoring occasions in the wake-up period, so that the first partial identifier can identify the first communication apparatus in the plurality of communication apparatuses corresponding to the monitoring occasion, and the length of the first partial identifier can be properly controlled.

With reference to the first aspect, the second aspect, or the third aspect, in a possible implementation, the first length satisfies: L=log2(N), where L is the first length, log2 is a logarithmic operation, and N is the quantity of monitoring occasions in the wake-up period.

With reference to the first aspect, the second aspect, or the third aspect, in a possible implementation, N satisfies: N=M*Ms, where M is a quantity of wake-up frames in the wake-up period, and Ms is a quantity of monitoring occasions included in one wake-up frame.

With reference to the first aspect, the second aspect, or the third aspect, in a possible implementation, the first partial identifier is most significant (S-H) bits of the second identifier, S is the length of the second identifier, H is less than or equal to the first length, and S and H are positive integers.

With reference to the first aspect, the second aspect, or the third aspect, in a possible implementation, the first identifier includes K bits, values of the K bits are all a first value, and K is a positive integer.

In this embodiment of this application, the first communication apparatus may be mapped to the K bits in the first message, and the K bits represent the first communication apparatus. When the values of the K bits are all the first value, the first message includes the first identifier. The values of the K bits indicate the first identifier, so that a quantity of bits occupied by the first identifier can be further reduced, thereby increasing a capacity of the first message. In addition, after receiving the first message, the first communication apparatus needs to detect only the values of the K bits, to determine whether the first message is used for waking up, so that wake-up efficiency of the first communication apparatus can be improved.

With reference to the first aspect, the second aspect, or the third aspect, in a possible implementation, the K bits meet at least one or more of the following:

K is related to a quantity of hash functions or random functions; or locations of the K bits in the first message are determined based on an output value of the hash function or the random function.

In this embodiment of this application, there may be K random functions, and there may be K hash functions. The K bits of the first identifier may be obtained by inputting the first partial identifier into the K random functions or the K hash functions. Therefore, K is related to the quantity of random functions or hash functions, and the locations of the K bits in the first message are determined based on output values of the K hash functions or the K random functions. A mapping relationship between the first message and the K bits of the first identifier can be quickly determined by using the K random functions or the K hash functions.

With reference to the first aspect, the second aspect, or the third aspect, in a possible implementation, the first monitoring occasion satisfies: $i=ID3 \bmod N$, where ID3 is the third identifier, N is the quantity of monitoring occasions in the wake-up period, i is a sequence number of the first monitoring occasion in the N monitoring occasions, and mod is a modulo operation.

With reference to the first aspect, the second aspect, or the third aspect, in a possible implementation, the first monitoring occasion is included in a first wake-up frame, and the first wake-up frame satisfies: $SFN=ID3 \bmod M$, where M is a quantity of wake-up frames in the wake-up period, SFN is a frame number of the first wake-up frame, and ID3 is the third identifier; and the first monitoring occasion satisfies: $i\_s=(ID3/M) \bmod Ms$, where M is a quantity of wake-up frames in the wake-up period, Ms is a quantity of monitoring occasions included in one wake-up frame, i_s is sequence numbers of the Ms monitoring occasions of the first monitoring occasion in the first wake-up frame, and mod is a modulo operation.

With reference to the first aspect, the second aspect, or the third aspect, in a possible implementation, the third identifier satisfies: $ID3=ID2\%Nmax$, where ID3 is the third identifier, ID2 is the second identifier, Nmax is a maximum value of N or Nmax is a product of a maximum value of M and a maximum value of Ms, N is the quantity of monitoring occasions in the wake-up period, M is the quantity of wake-up frames in the wake-up period, Ms is a quantity of monitoring occasions included in one wake-up frame, and % is a REM operation.

With reference to the first aspect, the second aspect, or the third aspect, in a possible implementation, the second identifier includes any one of a 5G system temporary mobile subscriber identifier 5G-S-TMSI, a 5G temporary mobile subscriber identifier 5G-TMSI, an inactive radio network temporary identifier I-RNTI, an international mobile subscriber identity, or a short I-RNTI.

According to a fourth aspect, an embodiment of this application provides a first communication apparatus, configured to perform the method according to any one of the first aspect or the possible implementations. The first communication apparatus includes units that perform the method according to any one of the first aspect or the possible implementations of the first aspect. The first communication apparatus may include a transceiver unit and a processing unit.

The processing unit is configured to determine a first identifier based on a second identifier, where a length of the first identifier is less than a length of the second identifier, and the second identifier is an identifier of the first communication apparatus.

The transceiver unit is configured to receive a first message, where the first message includes the first identifier.

The processing unit is further configured to wake up the first communication apparatus.

In a possible implementation, the first communication apparatus is a communication apparatus in a first group, and the transceiver unit is further configured to receive first indication information, where the first indication information indicates the communication apparatus in the first group to receive the first message.

In a possible implementation, the transceiver unit is further configured to receive second indication information, where the second indication information indicates the group to which the first communication apparatus belongs.

In a possible implementation, the transceiver unit is further configured to receive third indication information, where the third indication information indicates a communication apparatus in a second group to receive a paging message, and the first communication apparatus is not a communication apparatus in the second group.

In some implementations, the third indication information and the first indication information may be same indication information. In other words, the first indication information or the third indication information indicates the communication apparatus in the first group to receive the first message, and indicates the communication apparatus in the second group to receive the third indication information. The transceiver unit receives the first indication information or the third indication information.

In a possible implementation, the processing unit is further configured to determine a first monitoring occasion. The transceiver unit is specifically configured to receive the first message within the first monitoring occasion.

It may be understood that, for descriptions of the first identifier, the second identifier, the first message, the first indication information, the second indication information, the third indication information, the first monitoring occasion, and the like, refer to the method according to the first aspect or the possible implementations of the first aspect. Details are not described herein again. For technical effects brought by the fourth aspect or the possible implementations of the fourth aspect, refer to the descriptions of the technical effects brought by the first aspect or the possible implementations of the first aspect.

According to a fifth aspect, an embodiment of this application provides a first communication apparatus, configured to perform the method according to any one of the second aspect or the possible implementations. The first communication apparatus includes units that perform the method according to any one of the second aspect or the possible implementations of the second aspect. The first communication apparatus may include a transceiver unit and a processing unit.

The transceiver unit is configured to receive first indication information, where the first indication information indicates a communication apparatus in a first group to receive a first message.

The transceiver unit is further configured to receive the first message when a group to which the first communication apparatus belongs is the first group.

In a possible implementation, the transceiver unit is further configured to receive third indication information, where the third indication information indicates a communication apparatus in a second group to receive a paging message. The transceiver unit is further configured to receive the paging message when a group to which the first communication apparatus belongs is the second group.

In a possible implementation, the processing unit is configured to enter a random access procedure when the paging message includes a first identifier, where the first identifier is determined based on a second identifier of a second identifier, a length of the first identifier is less than a length of the second identifier, and the second identifier is an identifier of the first communication apparatus.

In a possible implementation, the transceiver unit is further configured to receive second indication information, where the second indication information indicates the group to which the first communication apparatus belongs.

In a possible implementation, the processing unit is configured to wake up the first communication apparatus when the first message includes a first identifier, where the first identifier is determined based on a second identifier of a second identifier, a length of the first identifier is less than a length of the second identifier, and the second identifier is an identifier of the first communication apparatus.

In a possible implementation, the processing unit is further configured to enter a random access procedure.

For descriptions of the first indication information, the first message, the second indication information, the third indication information, the paging message, and the first identifier, refer to the method according to the second aspect or the possible implementations of the second aspect. Details are not described herein again. For technical effects brought by the fifth aspect or the possible implementations of the fifth aspect, refer to the descriptions of the technical effects brought by the second aspect or the possible implementations of the second aspect.

According to a sixth aspect, an embodiment of this application provides a second communication apparatus, configured to perform the method according to any one of the third aspect or the possible implementations. The second communication apparatus includes units that perform the method according to any one of the third aspect or the possible implementations of the third aspect. The second communication apparatus may include a transceiver unit and a processing unit.

The processing unit is configured to determine a first identifier based on a second identifier, where a length of the first identifier is less than a length of the second identifier, and the second identifier is an identifier of a first communication apparatus.

The transceiver unit is configured to send a first message, where the first message is used to wake up the first communication apparatus, and the first message includes the first identifier.

In a possible implementation, the first communication apparatus is a communication apparatus in a first group, and the transceiver unit is further configured to send first indication information, where the first indication information indicates the communication apparatus in the first group to receive the first message.

In a possible implementation, the transceiver unit is further configured to send second indication information, where the second indication information indicates the group to which the first communication apparatus belongs.

In a possible implementation, the transceiver unit is further configured to send third indication information, where the third indication information indicates a communication apparatus in a second group to receive the paging message. The transceiver unit is further configured to send the paging message.

In a possible implementation, the processing unit is further configured to determine a first monitoring occasion. The transceiver unit is specifically configured to send the first message within the first monitoring occasion.

It may be understood that, for descriptions of the first identifier, the second identifier, the first message, the first indication information, the second indication information, the third indication information, the first monitoring occasion, and the like, refer to the method according to the third aspect or the possible implementations of the third aspect. Details are not described herein again. For technical effects brought by the sixth aspect or the possible implementations of the sixth aspect, refer to the descriptions of the technical effects brought by the third aspect or the possible implementations of the third aspect.

According to a seventh aspect, an embodiment of this application provides a communication apparatus. The communication apparatus includes a processor, configured to perform the method according to any one of the first aspect or the possible implementations. Alternatively, the processor is configured to execute a program stored in a memory. When the program is executed, the method according to any one of the first aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive or send a signal.

According to an eighth aspect, an embodiment of this application provides a communication apparatus. The communication apparatus includes a processor, configured to perform the method according to any one of the second aspect or the possible implementations. Alternatively, the processor is configured to execute a program stored in a memory. When the program is executed, the method according to any one of the second aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to: receive or send a signal.

According to a ninth aspect, an embodiment of this application provides a communication apparatus. The communication apparatus includes a processor, configured to perform the method according to any one of the third aspect or the possible implementations. Alternatively, the processor is configured to execute a program stored in a memory. When the program is executed, the method according to any one of the third aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to: receive or send a signal.

According to a tenth aspect, an embodiment of this application provides a communication apparatus. The communication apparatus includes a logic circuit and an interface, and the logic circuit is coupled to the interface. The logic circuit is configured to determine a first identifier, and the interface is configured to input a first message.

It may be understood that, for descriptions of the first identifier and the first message, refer to the method according to any one of the first aspect or the possible implementations. Details are not described herein again.

According to an eleventh aspect, an embodiment of this application provides a communication apparatus. The communication apparatus includes a logic circuit and an interface, and the logic circuit is coupled to the interface. The logic circuit is configured to determine a first identifier, and the interface is configured to output a first message.

It may be understood that, for descriptions of the first identifier and the first message, refer to the method according to any one of the third aspect or the possible implementations. Details are not described herein again.

According to a twelfth aspect, an embodiment of this application provides a computer-readable storage medium. The computer-readable storage medium is configured to store a computer program. When the computer program is run on a computer, the method according to any one of the first aspect or the possible implementations of the first aspect is performed, the method according to any one of the second aspect or the possible implementations of the second aspect is performed, or the method according to any one of the third aspect or the possible implementations of the third aspect is performed.

According to a thirteenth aspect, an embodiment of this application provides a computer program product. The computer program product includes a computer program or computer code. When the computer program product runs on a computer, the method according to any one of the first aspect or the possible implementations of the first aspect is performed, the method according to any one of the second aspect or the possible implementations of the second aspect is performed, or the method according to any one of the third aspect or the possible implementations of the third aspect is performed.

According to a fourteenth aspect, an embodiment of this application provides a communication system. The communication system includes a first communication apparatus and a second communication apparatus. The first communication apparatus is configured to perform the method according to any one of the first aspect or the possible implementations of the first aspect, or the first communication apparatus is configured to perform the method according to any one of the second aspect or the possible implementations of the second aspect. The second communication apparatus is configured to perform the method according to any one of the third aspect or the possible implementations of the third aspect.

**BRIEF DESCRIPTION OF DRAWINGS**

The following describes the accompanying drawings used in embodiments of this application.

FIG. 1 is a diagram of a structure of a communication system according to an embodiment of this application;
FIG. 2A is a diagram of a structure of a terminal device according to an embodiment of this application;
FIG. 2B is a diagram of a structure of a terminal device according to an embodiment of this application;
FIG. 3 is a schematic flowchart of a communication method according to an embodiment of this application;
FIG. 4 is a diagram of a system frame according to an embodiment of this application;
FIG. 5 is a diagram of a first message according to an embodiment of this application;
FIG. 6 is a schematic flowchart of another communication method according to an embodiment of this application;
FIG. 7 is a diagram of another system frame according to an embodiment of this application;
FIG. 8 is a schematic flowchart of still another communication method according to an embodiment of this application;
FIG. 9 is a schematic flowchart of yet another communication method according to an embodiment of this application; and
FIG. 10 to FIG. 12 each are a diagram of a structure of a communication apparatus according to an embodiment of this application.

**DESCRIPTION OF EMBODIMENTS**

In the specification, claims, and accompanying drawings of this application, the terms "first", "second", and the like are merely intended to distinguish between different objects, but do not limit a sequence, a time sequence, a priority, or an importance degree of a plurality of objects. In embodiments of this application, "a plurality of" refers to two or more. In addition, the terms "include", "have", and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" usually indicates an "or" relationship between the associated objects.

"Embodiments" mentioned in this specification mean that a specific feature, structure, or characteristic described in combination with the embodiments may be included in at least one embodiment of this application. The phrase appearing at various locations in this specification may neither necessarily mean a same embodiment, nor mean an independent or optional embodiment exclusive from another embodiment. It may be understood explicitly and implicitly by a person skilled in the art that embodiments described in this specification may be combined with other embodiments.

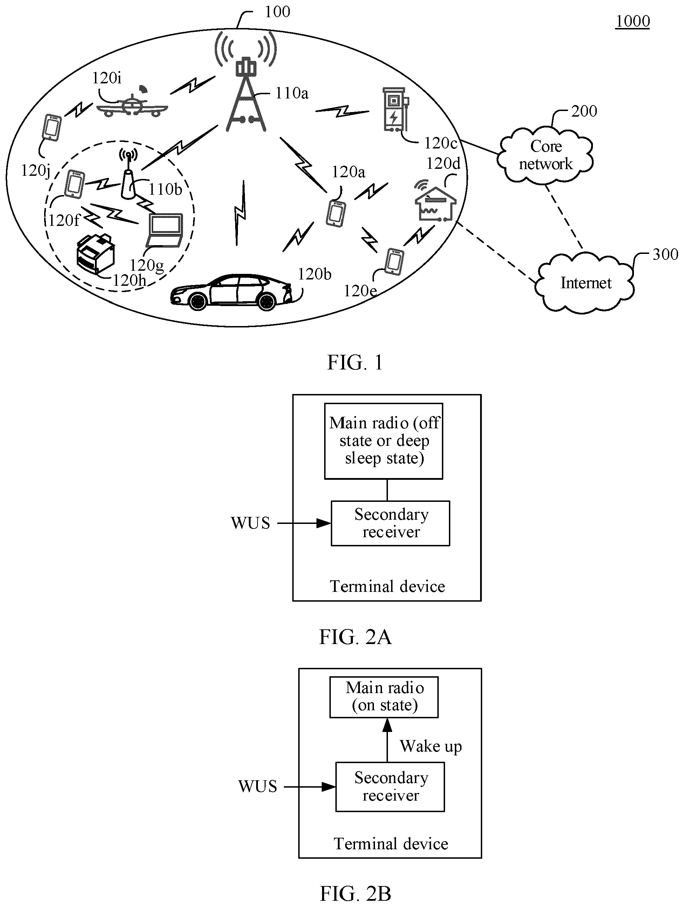

FIG. 1 is a diagram of an architecture of a communication system 1000 used in an embodiment of this application. As shown in FIG. 1, the communication system includes a radio access network 100 and a core network 200. Optionally, the communication system 1000 may further include the internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1 is only a diagram. The communication system may further include other network devices, for example, may further include a wireless relay device and a wireless backhaul device, which are not shown in FIG. 1.

The network device in embodiments of this application may be understood as a radio access network device, and may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). Herein, the CU completes functions of a radio resource control protocol and a packet data convergence layer protocol (packet data convergence protocol, PDCP) of the base station, and may further complete a function of a service data adaptation protocol (service data adaptation protocol, SDAP); and the DU completes functions of a radio link control layer and a medium access control (medium access control, MAC) layer of the base station, and may further complete a function of some or all physical layers. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, descriptions are provided below by using an example in which the base station serves as the radio access network device.

The terminal in embodiments of this application may also be referred to as a terminal device, user equipment (user equipment, UE), a mobile station, a mobile terminal, or the like. The terminal may be widely used in various scenarios, such as device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, remote medical, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on an airplane, a balloon, and a satellite. An application scenario of the network device and the terminal device is not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

For ease of understanding the technical solutions of this application, the following describes related technical terms used in this application.

1. Wake-up receiver (wake-up receive, WUR)

The wake-up receiver (or a wake-up circuit) can listen to a wake-up signal (wake-up signal, WUS) with low power consumption. After receiving the wake-up signal, the wake-up receiver may trigger wake-up of a main radio. For example, the wake-up receiver is a receiver that can receive a signal modulated through on-off keying (on-off keying, OOK) or frequency shift keying (frequency shift keying, FSK), or the wake-up receiver is a receiver that can receive a signal that does not need fast Fourier transform (fast Fourier transform, FFT) or inverse fast Fourier transform (inverse fast Fourier transform, IFFT) in a generation or decoding process, or the wake-up receiver is a receiver that can receive a signal on which Manchester encoding is performed.

The "wake-up receiver" in this application may be alternatively described as a "low power receiver", an "ultra-low power receiver", a "low power wake-up receiver", an "ultra-low power wake-up receiver", a "wake-up radio (wake-up radio)", a "secondary receiver", a "wake-up circuit", or the like. It should be understood that the WUR is merely a name of a receiver that can listen to a wake-up signal with low power consumption in this application. The name of the receiver that listens to a wake-up signal with low power consumption is not limited in this application.

2. Main radio (main radio)

In this application, the main radio corresponds to the wake-up receiver. Power consumption of the main radio is high, but the main radio has more functions, and can receive and send more types of signals. For example, the main radio may be a receiver that normally communicates with a base station in a connected state, and a receiver that is responsible for main data transmission. For another example, the main radio is a receiver of a signal for which FFT or IFFT may be performed. For another example, the main radio is a receiver with high precision of a local oscillator.

The wake-up receiver consumes less energy than the main radio. In other words, energy consumption of a signal transmitted on a link of the wake-up receiver is lower than energy consumption of receiving, by the main radio, a signal transmitted on a main link. For example, the wake-up receiver is a receiver with low precision of a local oscillator. For another example, the wake-up receiver is a receiver that performs envelope detection. For another example, the wake-up receiver is a receiver that does not need to perform fast Fourier transform or inverse fast Fourier transform. These manners facilitate implementation of low power consumption of the wake-up receiver.

Because power consumption of the main radio is high, after receiving the wake-up signal, the wake-up receiver may trigger wake-up of the main radio. If the wake-up receiver does not trigger the main radio (or the main circuit) to wake up, the main radio is in an off state or a deep sleep state. The main radio may be configured to: send and receive data. The main radio is a receiver that can receive a synchronization signal block (synchronization signal block, SSB), a physical downlink control channel (physical downlink control channel PDCCH), a physical downlink shared channel (physical downlink shared channel, PDSCH), or a channel state information reference signal (channel state information reference signal, CSI RS). For another example, the main radio is a receiver that can receive a binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM modulation signal.

3. Wake-up signal

In this application, a signal monitored by the wake-up receiver is referred to as a "wake-up signal", or may be understood as a "signal transmitted on a wake-up link", a "WUR signal", or the like. The "wake-up signal" may be understood as a signal used to wake up a device or some modules or some links in a device.

For example, the WUR signal may be a signal modulated through on-off keying (on-off key, OOK) or frequency shift keying (frequency shift keying, FSK), may be a signal that does not need fast Fourier transform (fast Fourier transform, FFT) or inverse fast Fourier transform (inverse fast Fourier transform, IFFT) in a generation or decoding process, or may be a signal on which Manchester encoding is performed.

When OOK modulation is used, each bit may correspond to one symbol, and each bit may also be referred to as a chip (chip). For example, the bit may be an encoded bit. For a bit, when a bit value of the bit is 1, a signal is sent in a symbol corresponding to the bit (that is, a signal power in the symbol is not 0). When a bit value of the bit is 0, no signal is sent in a symbol corresponding to the bit (that is, a signal power in the symbol is 0). It should be understood that, alternatively, when the bit value of the bit is 0, a signal is sent in the symbol length (that is, a signal power in the symbol is not 0), and when the bit value of the bit is not 1, no signal is sent in the symbol (that is, a signal power in the symbol is 0). This is not limited in this application.

For the terminal device, the wake-up signal may include one or more of an identifier of a terminal device, a group identifier of the terminal device, a specific identifier, and a synchronization signal (or referred to as a "low power synchronization signal").

The identifier of the terminal device, the group identifier of the terminal device, or the specific identifier may be used by the terminal device to determine whether a network device pages the terminal device, to determine whether to trigger wake-up of the main radio.

The specific identifier may be an identifier for waking up all terminal devices. For example, the specific identifier may be earthquake warning information, tsunami warning information, or system message change information. Optionally, the specific identifier may be configured by a higher layer or predefined in a protocol.

The synchronization signal may be used by the terminal device to perform time synchronization with the network device based on the low power synchronization signal in the wake-up signal. Alternatively, the terminal device may measure signal quality of the low power synchronization signal, to determine signal quality of a current WUR link or quality of a signal in a cell.

In this application, a link for transmitting the wake-up signal is referred to as a "WUR link".

In this application, wake-up may also be replaced with paging.

FIG. 2A shows an example of a terminal device according to an embodiment of this application. As shown in FIG. 2A, the terminal device may include a main radio (main radio) and a secondary receiver. The secondary receiver has a function of listening to a wake-up signal with ultra-low power consumption, and is configured to listen to the wake-up signal. For example, the secondary receiver may include a wake-up receiver. When the main radio is in an on state, the main radio may be configured to: transmit and receive data.

For example, the secondary receiver may listen to the WUS on the WUR link. After receiving the WUS, the secondary receiver may detect whether the wake-up signal includes an identifier of the terminal device, a group identifier of the terminal device, or a specific identifier, to determine whether to trigger wake-up of the main radio. If the WUS does not include the identifier of the terminal device, the group identifier of the terminal device, or the specific identifier, it is determined not to trigger wake-up of the main radio, and the main radio is in an off state or a deep sleep state, as shown in FIG. 2A. If the WUR includes the identifier of the terminal device, the group identifier of the terminal device, or the specific identifier, wake-up of the main radio is triggered, so that the main radio is in an on state, as shown in FIG. 2B.

For example, when a network device does not send data to the terminal device, and the terminal device does not transmit data, the main radio of the terminal device may be in an off state or a deep sleep state, and the secondary receiver may be in an active state or an indirect active state, to listen to the wake-up signal. For example, the secondary receiver may further receive a synchronization signal on the WUR link, where the synchronization signal is used for time synchronization of the WUR link or is used to detect quality of the WUR link.

Generally, the network device may wake up a main radio of one or more terminal devices by including identifiers of the one or more terminal devices in the wake-up signal. After receiving the wake-up signal by using the secondary receiver, the terminal device detects whether the wake-up signal includes the identifier of the terminal device, to determine whether to wake up the main radio. When the wake-up signal includes the identifier of the terminal device, the terminal device wakes up the main radio, and enters a random access procedure. The identifier of the terminal device includes a 5G system temporary mobile subscriber identifier (5G system temporary mobile subscription identifier, 5G-S-TMSI) or an inactive radio network temporary identifier (inactive radio network temporary identifier, I-RNTI). The 5G-S-TMSI is 48 bits (bit), and includes three parts: an access and mobility management function (access and mobility management function, AMF) set identity (identity, ID), an AMF pointer (pointer), and a 5G temporary mobile subscriber identity (5G temporary mobile subscription identifier, 5G-TMSI). The AMF set ID is 10 bits, the AMF pointer is 6 bits, and the 5G-TMSI is 32 bits. The I-RNTI is 40 bits, and includes specific reference information of the terminal device (for example, context information of the terminal device on the network device) and a network device address index (for example, information used to determine a network device that has allocated a specific part of the terminal device).

In the foregoing process in which the network device wakes up the terminal device, because the identifier of the terminal device is long, the wake-up signal can carry a small quantity of identifiers of the terminal device, and consequently, the wake-up signal can be used to simultaneously wake up a small quantity of terminal devices.

In view of this, this application provides a communication method and a communication apparatus, to improve wake-up efficiency. The method provided in embodiments of this application may be applied to the communication system shown in FIG. 1. Alternatively, the method may be applied to a first communication apparatus and a second communication apparatus. The first communication apparatus may be the terminal device described above. For example, the first communication apparatus may include a secondary receiver and a main radio. The second communication apparatus may be the network device described above. For descriptions of the first communication apparatus and the second communication apparatus, refer to the foregoing descriptions. Details are not described herein again.

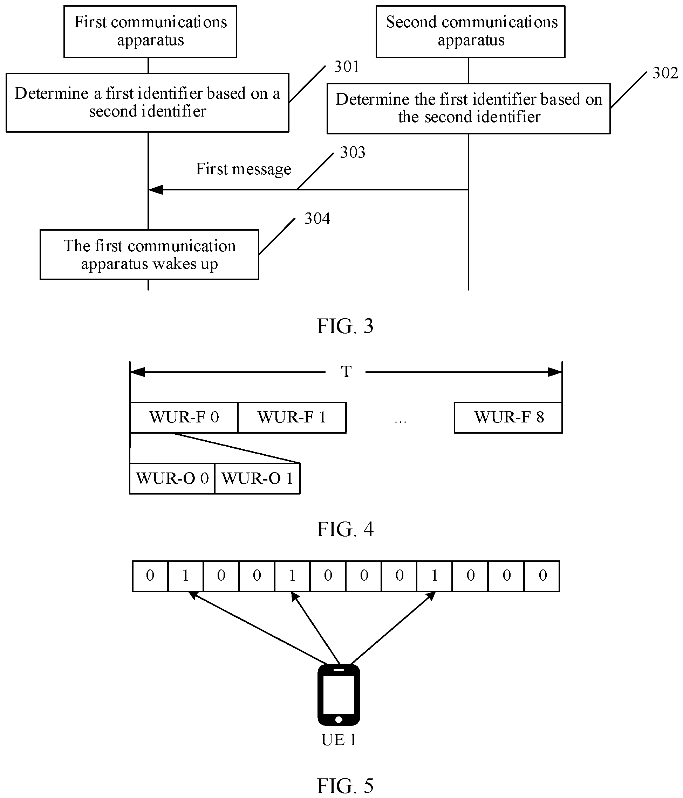

FIG. 3 is a schematic flowchart of a communication method according to an embodiment of this application. As shown in FIG. 3, the communication method includes but is not limited to the following steps.

301. A first communication apparatus determines a first identifier based on a second identifier.

The second identifier is an identifier of the first communication apparatus. For example, the second identifier may be an identifier allocated by a network device or a core network device to the first communication apparatus. For example, the second identifier may include any one of a 5G-S-TMSI, a 5G-TMSI, an I-RNTI, an international mobile subscriber identity (international mobile subscriber identity, IMSI), and a short I-RNTI (short I-RNTI). A quantity of bits of the short I-RNTI is less than a quantity of bits of the I-RNTI.

The first identifier identifies the first communication apparatus in a wake-up process. For example, the first identifier identifies the first communication apparatus in a first message, and the first message is used to wake up the first communication apparatus. The first message may be a wake-up signal or may be included in a wake-up signal.

The first communication apparatus determines the first identifier based on the second identifier, that is, the first identifier is related to the second identifier, so that the first identifier can identify the first communication apparatus in the first message.

For example, after receiving the second identifier allocated by the core network device to the first communication apparatus, the first communication apparatus may determine the first identifier based on the second identifier, or the first communication apparatus may determine the first identifier based on the second identifier before monitoring the first message. For example, after entering an inactive state or an idle state, the first communication apparatus determines the first identifier based on the second identifier. For another example, the first communication apparatus may determine the first identifier based on the second identifier after the main radio is turned off. In some implementations, the first communication apparatus may alternatively determine the first identifier based on the second identifier after receiving the first message. This is not limited in this application.

A length of the first identifier is less than a length of the second identifier. In this manner, a quantity of bits occupied by the identifier of the first communication apparatus in the first message may be reduced, so that the first message can accommodate identifiers of more communication apparatuses, that is, a capacity of the first message is increased.

For example, the first communication apparatus determines the first identifier based on a first partial identifier of the second identifier, where the first partial identifier is a partial identifier of the second identifier. That is, the first identifier is determined based on the partial identifier of the second identifier, and the first identifier is related to the first partial identifier. It may be understood that the first identifier may be the first partial identifier, or may be calculated based on the first partial identifier. For example, the second identifier may be a 48-bit 5G-S-TMSI, and the first partial identifier or the first identifier may be first 24 bits of the 5G-S-TMSI. When calculating the first identifier, the first communication apparatus needs to perform calculation only based on the partial identifier of the second identifier, so that a calculation amount can be reduced, and therefore the first identifier can be determined more quickly, and the length of the first identifier can be further reduced, thereby increasing a capacity of the first message.

In a possible implementation, a difference between lengths of the first partial identifier and the second identifier is less than or equal to a first length, and the first length is related to a quantity of monitoring occasions in a wake-up period.

The wake-up period is a period in which the first communication apparatus monitors the first message. The first communication apparatus monitors and receives the first message in each wake-up period. For example, the wake-up period may be a DRX cycle or a period configured by the network device (for example, a second communication apparatus). The monitoring occasion may be an occasion on which the first communication apparatus monitors the first message. It may be understood that the monitoring occasion may be a time period or a time domain location. Optionally, the monitoring occasion may occupy one or more symbols, one or more slots, or one or more frames.

For example, one wake-up period may include at least one monitoring occasion. One communication apparatus may correspond to one monitoring occasion, that is, the first communication apparatus may monitor one monitoring occasion in one wake-up period. For example, the first communication apparatus monitors and receives the first message within the monitoring occasion, and the first monitoring occasion is one of the at least one monitoring occasion.

It may be understood that a larger quantity of monitoring occasions in the wake-up period indicates a smaller quantity of communication apparatuses corresponding to the first monitoring occasion. Therefore, fewer bits may identify the first communication apparatus in a plurality of communication apparatuses corresponding to the first monitoring occasion. In other words, the length of the first partial identifier is related to the quantity of monitoring occasions in the wake-up period. For example, the difference between the lengths of the first partial identifier and the second identifier is less than or equal to the first length, and the first length is related to the quantity of monitoring occasions in the wake-up period. That is, the first partial identifier is a partial identifier obtained when bits less than or equal to the first length are removed from the second identifier.

In this embodiment of this application, the length of the first partial identifier may be determined based on the quantity of monitoring occasions in the wake-up period, so that the first partial identifier can identify the first communication apparatus in the plurality of communication apparatuses corresponding to the first monitoring occasion, and the length of the first partial identifier can be properly controlled.

In some implementations, the first length satisfies the following formula:

$$L = \log2(N) \tag{1}$$

L is the first length, N is the quantity of monitoring occasions in the wake-up period, and log2 is a base-2 logarithm operation.

For example, the wake-up period includes the N monitoring occasions, and the first communication apparatus corresponds to one of the N monitoring occasions. The N monitoring occasions may be identified by using L bits. Therefore, communication apparatuses with same L bits in the second identifier may correspond to a same monitoring occasion, that is, L bits in second identifiers of a plurality of communication apparatuses corresponding to the monitoring occasion corresponding to the first communication apparatus are the same. That is, after the L bits are removed from the second identifier, the first communication apparatus can also be identified in the plurality of communication apparatuses corresponding to the monitoring occasion. Therefore, the first partial identifier may be a partial identifier obtained when bits less than or equal to the L bits are removed from the second identifier.

For example, N is 128, that is, one wake-up period includes 128 monitoring occasions; and the first length is 7, that is, the first partial identifier may be a partial identifier obtained when 7 bits are removed from the second identifier, or the first partial identifier is a partial identifier obtained when bits less than 7 bits are removed from the second identifier.

In an implementation, the monitoring occasion may be included in a radio frame or a wake-up frame. The wake-up frame may be a radio frame. For example, one wake-up period includes M wake-up frames, and one wake-up frame may include Ms monitoring occasions. In this implementation, the quantity of monitoring occasions in the wake-up period may satisfy the following formula:

$$N = M * Ms \tag{2}$$

M is a quantity of wake-up frames in the wake-up period, and Ms is a quantity of monitoring occasions included in one wake-up frame. It may be understood that the wake-up frame is a radio frame that includes a monitoring occasion. In this embodiment of this application, the wake-up frame may include a monitoring occasion or a start point of the monitoring occasion, and Ms is the quantity of monitoring occasions included in one wake-up frame, or Ms is a quantity of a plurality of monitoring occasions that include starting points of the plurality of monitoring occasions in one wake-up frame.

That is, the first length satisfies:

$$L = \log 2(M*Ms) \tag{3}$$

In a possible implementation, the first partial identifier is a most significant (S-H) bits of the second identifier, where S is the length of the second identifier, H is less than or equal to the first length, and S and H are positive integers. That is, the first partial identifier is a partial identifier obtained when least significant H bits are removed from the second identifier.

Optionally, a parameter (for example, N, M, Ms, or the wake-up period), indication information, or configuration information in this application may be notified or configured by the network device (for example, the second communication apparatus) to the first communication apparatus by using a radio resource control (radio resource control, RRC) message, a system message, a WUR signal, downlink control information (downlink control information, DCI), or a media access control (media access control, MAC) control element (control element, CE) at a MAC layer.

It may be understood that one communication apparatus may correspond to one monitoring occasion, and one monitoring occasion may correspond to a plurality of communication apparatuses. That is, the plurality of communication apparatuses may monitor a same monitoring occasion. Therefore, the plurality of communication apparatuses may correspond to the monitoring occasion based on the second identifier. For example, the first communication apparatus may determine, based on the second identifier of the first communication apparatus, the first monitoring occasion corresponding to the first communication apparatus. For example, the first monitoring occasion may be determined by calculating a remainder between the second identifier of the first communication apparatus and N. It can be learned from the foregoing descriptions that last L bits of second identifiers of the plurality of communication apparatuses corresponding to the first monitoring occasion are the same. Therefore, the first partial identifier may be the most significant (S-H) bits of the second identifier, so that the first partial identifier can identify the first communication apparatus in the plurality of communication apparatuses corresponding to the first monitoring occasion.

302. The second communication apparatus determines the first identifier based on the second identifier.

It may be understood that, for a specific implementation in which the second communication apparatus determines the first identifier based on the second identifier, refer to related descriptions of step 301. Details are not described herein again.

It may be understood that the second communication apparatus and the first communication apparatus have a consistent understanding of how to determine the first identifier based on the second identifier, that is, the second communication apparatus and the first communication apparatus determine the first identifier based on the second identifier in a same manner.

In an optional manner, when determining to wake up the first communication apparatus, the second communication apparatus determines the first identifier based on the second identifier. Alternatively, after receiving the second identifier allocated by the core network device to the first communication apparatus, the second communication apparatus may determine the first identifier based on the second identifier.

303. The first communication apparatus receives the first message, and correspondingly, the second communication apparatus sends the first message.

The first message includes a first identifier of the first communication apparatus, and is used to wake up the first communication apparatus.

For example, the first message may be used to wake up at least one communication apparatus, the first message includes a first identifier of the at least one communication apparatus, and the first communication apparatus is any one of the at least one communication apparatus. The second communication apparatus determines at least one to-be-woken-up communication apparatus and a first identifier of the at least one communication apparatus, and generates and sends the first message.

For example, the first message is carried on a WUR link, or the second communication apparatus sends the first message on a WUR link. Correspondingly, the first communication apparatus receives the first message on the WUR link. For example, the first communication apparatus receives the first message by using a secondary receiver. The WUR link in this application may also be understood as a WUR channel.

It may be understood that step 301 may be performed before step 303, or may be performed after step 303. To be specific, the first communication apparatus may determine the first identifier before receiving the first message, or the first communication apparatus may determine the first identifier based on the second identifier after receiving the first message. This is not limited in this application.

In a possible implementation, step 303 may specifically include: The first communication apparatus and the second communication apparatus determine a first monitoring occasion. The second communication apparatus sends the first message within the first monitoring occasion, and correspondingly, the first communication apparatus receives the first message within the first monitoring occasion.

In this embodiment of this application, the first communication apparatus listens to and receives the first message within the first monitoring occasion by using a secondary receiver. It may be understood that the secondary receiver of the first communication apparatus is in an on state within the first monitoring occasion, and may be in an off state outside the first monitoring occasion, and does not need to keep listening to the first message, so that energy consumption of the first communication apparatus can be reduced.

For example, the first communication apparatus and the second communication apparatus may determine the first monitoring occasion based on a third identifier, where the third identifier is related to the second identifier. A length of the third identifier is less than the length of the second identifier, and the first communication apparatus can determine the first monitoring occasion more quickly based on the third identifier, thereby improving wake-up efficiency of the first communication apparatus.

In some implementations, the third identifier may include least significant Z bits of the second identifier, and Z is related to a maximum value of the quantity of monitoring occasions in the wake-up period. For example, Z satisfies the following formula:

$$Z = \log2(Nmax) \tag{4}$$

Nmax is a maximum value of N, N is the quantity of monitoring occasions in the wake-up period, and log2 is a base-2 logarithm operation. It may be understood that Nmax may be predefined in a protocol, or may be configured by the second communication apparatus. This is not limited herein. Optionally, the monitoring occasion may be included in a wake-up frame, Nmax may be a product of a maximum value of M and a maximum value of Ms, M is a quantity of wake-up frames in the wake-up period, and Ms is a quantity of monitoring occasions included in one wake-up frame, that is, N=M*Ms.

It may be understood that a value of Z is merely an example, and the value of Z shown above should not be understood as a limitation on this application. For example, the value of Z in this application may also be greater than log2(Nmax).

In this implementation, after the first communication apparatus or the second communication apparatus may calculate Z according to Formula (4), when the second identifier changes, the first communication apparatus or the second communication may directly determine the third identifier based on Z.

In some other implementations, the third identifier may be determined according to the following formula:

$$ID3 = ID2\%Nmax \tag{5}$$

ID3 is the third identifier, ID2 is the second identifier, Nmax is a maximum value of N, N is the quantity of monitoring occasions in the wake-up period, and % is a REM operation. That is, the third identifier is a remainder obtained by dividing the second identifier by Nmax.

In this implementation, the first communication apparatus or the second communication apparatus may directly calculate the third identifier of the first communication apparatus according to Formula (5), to avoid performing a complex logarithmic operation.

For determining the first monitoring occasion, this embodiment of this application further provides the following several implementations:

Implementation 1: The first monitoring occasion is determined according to the following formula:

$$i = ID3 \bmod N \tag{6}$$

ID3 is a third identifier, N is the quantity of monitoring occasions in the wake-up period, i is a sequence number of the first monitoring occasion in the N monitoring occasions in one wake-up period, and mod is a modulo operation. In other words, the first monitoring occasion is an $i^{th}$ monitoring occasion in the N monitoring occasions. The first communication apparatus may determine the first monitoring occasion according to Formula (6), and receive the first message within the first monitoring occasion. The second communication apparatus may determine the first monitoring occasion according to Formula (6), and send the first message within the first monitoring occasion.

In some implementations, the first monitoring occasion may be determined based on the third identifier and an offset. For example, the first monitoring occasion may be determined according to the following formula:

$$i = ID3 \bmod N + offset \tag{7}$$

ID3 is a third identifier, N is the quantity of monitoring occasions in the wake-up period, i is a sequence number of the first monitoring occasion in the N monitoring occasions in one wake-up period, mod is a modulo operation, and offset is an offset. It may be understood that the offset may be configured by the second communication apparatus.

Implementation 2: The first monitoring occasion is included in a first wake-up frame. The first wake-up frame satisfies the following formula:

$$SFN = ID3 \bmod M \qquad (8)$$

M is a quantity of wake-up frames in the wake-up period, SFN is a frame number of the first wake-up frame, and ID3 is the third identifier.

The first monitoring occasion satisfies the following formula:

$$i\_s = (ID3/M) \bmod Ms \qquad (9)$$

M is a quantity of wake-up frames in the wake-up period, Ms is a quantity of monitoring occasions included in one wake-up frame, i_s is sequence numbers of the Ms monitoring occasions of the first monitoring occasion in the first wake-up frame, and mod is a modulo operation. For example, i_s may also be understood as a subframe number or a slot number of the first monitoring occasion in the first wake-up frame. i_s may also be understood as a monitoring occasion number of the first monitoring occasion in the first wake-up frame.

The first communication apparatus and the second communication apparatus may determine the frame number of the first wake-up frame according to Formula (8), and then determine the sequence number of the first monitoring occasion in the first wake-up frame according to Formula (9), to determine the first monitoring occasion.

In some implementations, the first wake-up frame may be determined based on the third identifier and an offset. For example, the first wake-up frame satisfies the following formula:

$$SFN = ID3 \bmod M + RF\_offset \qquad (10)$$

M is a quantity of wake-up frames in the wake-up period, SFN is a frame number of the first wake-up frame, ID3 is the third identifier, and RF_offset is an offset of a wake-up frame. It may be understood that RF_offset may be configured by the second communication apparatus. Optionally, a location of the first monitoring occasion in the first wake-up frame may also be determined based on the third identifier and the offset.

For example, FIG. 4 shows an example of a system frame according to an embodiment of this application. It is assumed that M=8, Ms=2, RF_offset=0, and ID3=32, that is, one wake-up period may include eight wake-up frames (for example, WUR-F 0 to WUR-F 8 in FIG. 4), one wake-up frame includes two monitoring occasions (for example, WUR-O 0 and WUR-O 1 in FIG. 4), and the third identifier is 32. SFN=0 may be calculated according to Formula (10), and i_s=0 may be calculated according to Formula (9), that is, the first wake-up frame is a 1st wake-up frame in the eight wake-up frames, and the first monitoring occasion is a 1st monitoring occasion in the first wake-up frame. Therefore, the first monitoring occasion is a 1st monitoring occasion in a 1st wake-up frame.

304. The first communication apparatus wakes up.

For example, that the first communication apparatus wakes up may be specifically: The first communication apparatus wakes up a main radio of the first communication apparatus, a main radio of the first communication apparatus wakes up, or a secondary receiver of the first communication apparatus wakes up a main radio of the first communication apparatus. After receiving the first message, the first communication apparatus detects whether the first message includes the first identifier of the first communication apparatus. When the first message includes the first identifier, the first communication apparatus wakes up the main radio. It may be understood that before the first communication apparatus wakes up, the first communication apparatus may listen to the first message on the WUR link by using the secondary receiver with ultra-low power consumption. After the first communication apparatus wakes up, the first communication apparatus may perform data transmission and receiving with the second communication apparatus by using the main radio.

For example, after waking up, the first communication apparatus enters a random access procedure, and establishes communication with the second communication apparatus. It may be understood that in this embodiment of this application, after waking up, the first communication apparatus may directly enter the random access procedure without receiving a paging message.

For example, a maximum quantity of first identifiers included in the first message and a maximum time length, a start location, and/or an end location of a detection window in which the first message is located may be predefined in a protocol, or may be configured by the second communication apparatus. A time unit of the maximum time length of the detection window may be a DRX cycle, a radio frame, a slot, or a symbol.

In this embodiment of this application, the first communication apparatus determines the first identifier based on the second identifier, so that the first identifier can identify the first communication apparatus. The first message is used to wake up the first communication apparatus, the length of the first identifier is less than the length of the second identifier, and the first identifier identifies the first communication apparatus in the first message, to avoid directly carrying the second identifier in the first message, so that a quantity of bits occupied by the identifier of the first communication apparatus in the first message is reduced, and therefore the first message can accommodate identifiers of more communication apparatuses, that is, a capacity of the first message is increased, and the first message that carries the first identifier can be used to simultaneously wake up more communication apparatuses than a first message that carries the second identifier and that has a same length.

To explain the first identifier in more detail, this embodiment of this application further provides the following several examples. It may be understood that the first identifier shown in FIG. 3 may be any one of the following several examples.

Example 1: The first identifier is the first partial identifier, that is, the first identifier is a partial identifier of the second identifier.

It may be understood that, for the first partial identifier, refer to the foregoing related descriptions. Details are not described herein again.

In a possible implementation, the first identifier is a partial identifier obtained when least significant L bits are removed from the second identifier. The first communication apparatus may calculate the first identifier according to the following formula:

$$ID1 = ID2/N \qquad\qquad (11)$$

ID1 is the first identifier, ID2 is the second identifier, and N is the quantity of monitoring occasions in the wake-up period. That is, the first identifier may be a quotient obtained by dividing the second identifier by N. It may be understood that dividing the second identifier by N may be understood as shifting the second identifier rightward by L bits, that is, the first identifier is a partial identifier obtained after the least significant L bits are removed from the second identifier.

In another possible implementation, the first communication apparatus or the second communication apparatus may calculate the first identifier according to the following formula:

$$ID1 = ID2/(M * Ms) \qquad\qquad (12)$$

ID1 is the first identifier, ID2 is the second identifier, M is a quantity of wake-up frames in the wake-up period, and Ms is a quantity of monitoring occasions included in one wake-up frame.

It may be understood that, to further improve wake-up efficiency of the WUR link, the length of the first identifier may be further reduced. For example, the length of the first identifier may be reduced. For example, the second identifier may be a 5G-S-TMSI or most significant X bits of the 5G-TMSI, or the second identifier may be a short I-RNTI or all or some bits of the I-RNTI. X may be a value configured by the first communication apparatus or the second communication apparatus. For example, X may be 24 or 15.

For example, the wake-up period T is 1.28 seconds (second, S), M is 128, and Ms is 1. In other words, one wake-up period includes 128 wake-up frames, and one wake-up frame includes one monitoring occasion. Therefore, L=log2(M*Ms)=7. A subcarrier spacing (subcarrier spacing, SCS) is 30 kilohertz (kilohertz, kHz), and one monitoring occasion corresponds to 20 slots. On-off keying (on-off keying, OOK) modulation is used on the WUR-link, and a coding scheme is Manchester encoding, that is, 1-bit data is encoded into 2-bit data. It is assumed that one slot includes 14 symbols, and 1-bit data is transmitted on each symbol.

Assuming that the second identifier is a 32-bit 5G-TMSI, the first identifier of the first communication apparatus may be most significant 25 bits of the second identifier, and occupies 50 symbols. First identifiers of five communication apparatuses may be transmitted in 20 slots. Therefore, the five communication apparatuses may be woken up within one monitoring occasion, that is, the five communication apparatuses are woken up within 10 ms.

Assuming that the second identifier is 24 bits, the first identifier is 17 bits, and occupies 34 symbols. First identifiers of eight communication apparatuses may be transmitted in 20 slots. Therefore, the eight communication apparatuses may be woken up within one monitoring occasion, that is, the eight communication apparatuses are woken up within 10 ms. It can be learned from the foregoing descriptions that, considering that a signal, for example, a synchronization signal, other than the first identifier may further need to be transmitted on the WUR link, when the first identifier is 7 bits, 16 communication apparatuses can be woken up within one monitoring occasion.

The foregoing example is based on a case in which 1-bit data is transmitted on one symbol. Optionally, multi-bit data, for example, 6-bit data, may alternatively be transmitted on one symbol. In this way, the first message can accommodate more first identifiers. Optionally, the first communication apparatus may report a capability of receiving a data rate in a time unit that is supported by a WUR receiver of the first communication apparatus. The time unit may be a symbol, a slot, or a frame. The data rate may be an OOK data rate or an FSK data rate. For example, the first communication apparatus may report a capability of receiving an OOK rate by a WUR receiver of the first communication apparatus in one symbol. Optionally, the second communication apparatus may indicate a rate of data sent by the first communication apparatus on the WUR link in a time unit. For example, the second communication apparatus may indicate, by using a system message, a quantity of bits sent by the second communication apparatus on the WUR link on one symbol through OOK. Optionally, the second communication apparatus may use different sending rates on different WUR links.

In this embodiment of this application, the first identifier is a partial identifier of the second identifier, so that a quantity of bits occupied by the first communication apparatus in the first message can be reduced, and therefore the first message can accommodate identifiers of more communication apparatuses, that is, a capacity of the first message is increased.

Example 2: The first identifier is determined based on a frame check sequence of the first partial identifier, that is, the first communication apparatus or the second communication apparatus may determine the first identifier based on the frame check sequence of the first partial identifier.

For example, the frame check sequence of the first partial identifier may be a complement of a modulo-2 sum of the first sequence and the second sequence. The modulo-2 sum represents a sum of two binary numbers. For example, a modulo-2 sum of 1 and 1 and a modulo-2 sum of 0 and 0 are both 0, and a modulo 2 sum of 1 and 0 is 1. For another example, B(1011) represents a 4-bit binary number, a modulo-2 sum of B and 6(0110) is D(1101), and a modulo-2 sum of 7(0111) and A(1010) is D(1101). The complement represents a number to be changed. For example, a complement of 1 is 0, and a complement of 0 is 1. For example, a complement of D(1101) is 2(0010), and a complement of C(1100) is 3(0011). A first sequence is a remainder obtained when a P-bit string is shifted leftward by P bits and then is divided by a generator polynomial in a modulo-2 division manner. P is a quantity of bits of the first partial identifier, and a quantity of bits of the generator polynomial is P. A second sequence is a remainder obtained when a third sequence is divided by the generator polynomial in a modulo-2 division manner. The third sequence is a sequence obtained when bits of the first partial identifier are shifted leftward by P bits.

For example, when P=32, that is, the first partial identifier is 32 bits, the first sequence Y1 is a remainder obtained when $x^P$ $(x^{31} + x^{30} + x^{29} + x^{28} + x^{27} + x^{26} + x^{25} + x^{24} + x^{23} + x^{22} + x^{21} + X^{20} + x^{19} + x^{18} + x^{17} + x^{16} + x^{15} + x^{14} + x^{13} + x^{12} + x^{11} + x^{10} + x^9 + x^8 + x^7 + x^6 + x^5 + x^4 + x^3 + x^2 + x^1 + 1)$ is divided by a (modulo-2) generator polynomial $x^{32} + x^{26} + x^{23} + x^{22} + x^{16} + x^{12} + x^{11} + x^{10} + x^8 + x^7 + x^5 + x^4 + x^2 + x + 1$, where P is 32. It can be learned through calculation that Y1 is equal to 0xC704DD7B.

The second sequence Y2 is a remainder obtained when the third sequence Y3 is divided by the (modulo-2) generator polynomial, where the generator polynomial is $x^{32} + x^{26} + x^{23} + x^{22} + x^{16} + x^{12} + X^{11} + x^{10} + x^8 + x^7 + x^5 + x^4 + x^2 + x + 1$. Y3 is a product obtained when $x^{32}$ is multiplied by bits b31, b30, ..., and b0 of the first partial identifier. For example, Y3 is a generator polynomial $x^{32} (b31*x^{31} + b30*x^{30} + ... + b0*1)$. For example, if the first partial identifier is 0x12341234, a frame check sequence (Frame Check Sequence, FCS) 0x259DD322 of the first partial identifier may be calculated.

It may be understood that P being 32 is merely an example, and P being 32 should not be understood as a limitation on this application. For example, a value of P in this application may also be less than 32.

For example, the first identifier may be a frame check sequence of the first partial identifier or a partial identifier of the frame check sequence of the first partial identifier. The first communication apparatus or the second communication apparatus may truncate the frame check sequence of the first partial identifier to obtain the first identifier. For example, the first identifier may be first Y bits of the frame check sequence of the first partial identifier. Y may be determined based on a capacity of the WUR link, or may be determined based on an actual service requirement. For example, when a wake-up period T is 1.28 seconds, a subcarrier spacing is 30 kHz, on-off keying (on-off keying, OOK) modulation is used on the WUR link, a coding scheme is Manchester encoding, M is 128, and Ms is 1, a value of Y may be less than or equal to 8, to wake up 16 communication apparatuses within 10 ms of a capacity of the WUR link.

Optionally, the first identifier in this application may also be determined based on a frame check sequence of the second identifier. For example, the first identifier may be a frame check sequence of the second identifier or a partial identifier of the frame check sequence of the second identifier. For calculation of the frame check sequence of the second identifier, refer to the foregoing calculation of the frame check sequence of the first partial identifier. Details are not described herein again.

In this embodiment of this application, the first communication apparatus may determine the first identifier based on the frame check sequence of the first partial identifier. The first identifier can be quickly determined provided that the frame check sequence of the partial identifier of the second identifier is calculated. In addition, a probability that the first identifier of the first communication apparatus collides with a first identifier of another communication apparatus can be reduced, and reliability of the first identifier can be improved.

Example 3: The first identifier is determined based on the first partial identifier and a random function or a hash function, that is, the first communication apparatus may determine the first identifier based on the first partial identifier and the random function or the hash function.

For example, the first communication apparatus or the second communication apparatus may input the first partial identifier into the random function or the hash function to obtain the first identifier. The hash function may be a hash (hash) function.

In some possible implementations, the first identifier may include K bits, values of the K bits are all a first value, and K is a positive integer. The first value may be predefined in a protocol or configured by the second communication apparatus. For example, the first value may be 1.

In this embodiment of this application, the first communication apparatus may be mapped to the K bits in the first message, and the K bits represent the first communication apparatus. When the values of the K bits are all the first value, the first message includes the first identifier. The values of the K bits indicate the first identifier, so that a quantity of bits occupied by the first identifier can be further reduced, thereby increasing a capacity of the first message. In addition, after receiving the first message, the first communication apparatus needs to detect only the values of the K bits, to determine whether the first message is used for waking up, so that wake-up efficiency of the first communication apparatus can be improved.

For example, K is related to a quantity of hash functions or random functions; or locations of the K bits in the first message are determined based on an output value of the hash function or the random function.

For example, there may be K random functions, and there may be K hash functions. The first communication apparatus or the second communication apparatus may input the first partial identifier into the K random functions or the K hash functions, so that the first partial identifier may be mapped to the K bits in the first message. The K bits may represent the first identifier, that is, the first identifier includes the K bits in the first message. It may be understood that after receiving the first message, the first communication apparatus may detect the K bits in the first message, and when the values of the K bits are all the first value, determine that the first message includes the first identifier. For example, when the values of the K bits are all 1, the first communication apparatus determines that the first message includes the first identifier for wake-up.

The second communication apparatus inputs the first partial identifier into the K random functions, determines the locations of the K bits in the first message based on output values of the K random functions, and sets values of the locations corresponding to the K bits to the first value. The first communication apparatus inputs the first partial identifier into the K random functions, determines the locations of the K bits in the first message based on output values of the K random functions, and detects values of the locations corresponding to the K bits in the first message. When the values of the locations corresponding to the K bits are the first value, the first communication apparatus determines that the first message includes the first identifier.

For example, FIG. 5 shows an example of a first message according to an embodiment of this application. As shown in FIG. 5, after inputting the first partial identifier of the first communication apparatus (UE 1 in FIG. 5) into three random functions or three hash functions, the second communication apparatus maps the first partial identifier to three bits 2, 5, and 9, that is, the first identifier includes the three bits 2, 5, and 9. If the second communication apparatus determines to wake up the first communication apparatus, the second communication apparatus sends the first message after setting the three bits 2, 5, and 9 in the first message to 1. After receiving the first message, the first communication apparatus detects values of the three bits 2, 5, and 9 in the first message. When the values of the three bits are all 1, the first communication apparatus wakes up.

In this embodiment of this application, the second communication apparatus may map the first partial identifier to the K bits in the first message by using the random function or the hash function, that is, map the first partial identifier to the first identifier, so that the first identifier can be quickly determined, and the length of the first identifier can be further reduced; and only needs to input the partial identifier of the second identifier into the random function or the hash function, to reduce input lengths of the random function and the hash function, and reduce a probability that the first identifier of the first communication apparatus collides with a first identifier of another communication apparatus.

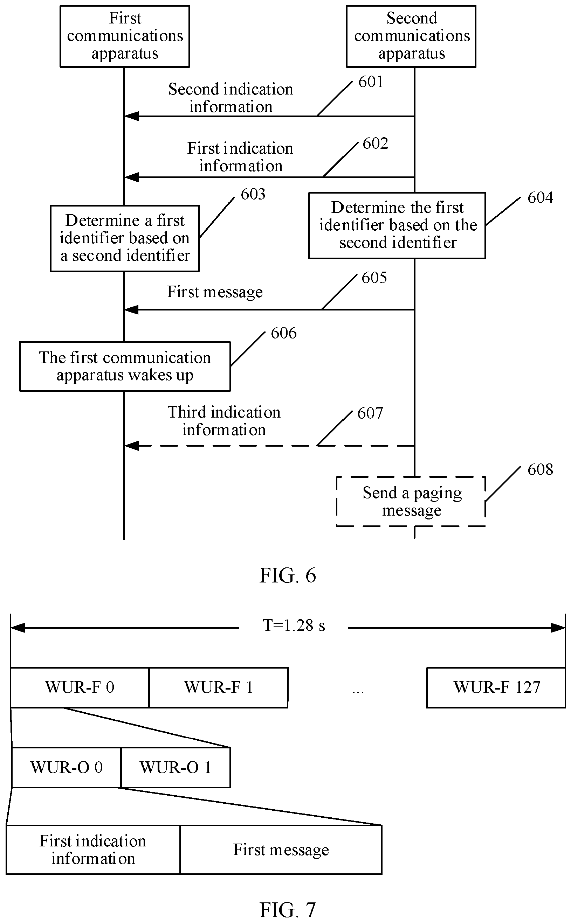

FIG. 6 is a schematic flowchart of another communication method according to an embodiment of this application. As shown in FIG. 6, the communication method includes but is not limited to the following steps.

601. A second communication apparatus sends second indication information, and correspondingly, a first communication apparatus receives the second indication information, where the second indication information indicates a group to which the first communication apparatus belongs.

For example, when there are a large quantity of communication apparatuses that need to be woken up, the second communication apparatus may group the communication apparatuses that need to be woken up, to reduce a delay of waking up the communication apparatuses. The second communication apparatus may wake up a communication apparatus in a first group by using a first message, and page a communication apparatus in a second group by using a paging message. The second communication apparatus may determine the group to which the first communication apparatus belongs, and indicate, by using the second indication information, the group to which the first communication apparatus belongs. For example, the second indication information may indicate that the group to which the first communication apparatus belongs is the first group.

For example, the second indication information may be carried in a system message or a radio resource control (radio resource control, RRC) configuration message. The RRC configuration message may include an RRC release (release) message, that is, the second indication information is carried in the RRC release message.

For determining, by the second communication apparatus, the group to which the first communication apparatus belongs, this embodiment of this application provides the following several implementations:

Implementation 1: The second communication apparatus may determine, based on an identifier of the first communication apparatus, the group to which the first communication apparatus belongs. For example, when the identifier of the first communication apparatus is less than or equal to a first threshold, the second communication apparatus may determine that the group to which the first communication apparatus belongs is the first group. When the identifier of the first communication apparatus is greater than the first threshold, the second communication apparatus determines that the group to which the first communication apparatus belongs is the second group. The identifier of the first communication apparatus may be a second identifier or a first identifier, and the first threshold may be configured by the second communication apparatus. This is not limited herein.

Implementation 2: The second communication apparatus may determine, based on a priority of the first communication apparatus, the group to which the first communication apparatus belongs. For example, when the priority of the first communication apparatus is high or higher than a second threshold, the second communication determines that the group to which the first communication apparatus belongs is the first group. When the priority of the first communication apparatus is low or lower than the second threshold, the second communication apparatus determines that the group to which the first communication apparatus belongs is the second group. For example, the priority of the first communication apparatus may be determined based on an energy saving requirement of the first communication apparatus. For example, a higher energy saving requirement of the first communication apparatus indicates a higher priority corresponding to the first communication apparatus. It may be understood that the second threshold may be configured by the second communication apparatus.

It may be understood that, in this implementation, the first communication apparatus may report the energy saving requirement of the first communication apparatus to the second communication apparatus, and the second communication apparatus may determine the priority of the first communication apparatus based on the energy saving requirement of the first communication apparatus, to determine the group to which the first communication apparatus belongs. Optionally, the second communication apparatus may directly determine, based on the energy saving requirement reported by the first communication apparatus, the group to which the first communication apparatus belongs. Optionally, the first communication apparatus directly reports a priority status to the second communication apparatus. Alternatively, the second communication apparatus groups first communication apparatuses based on a capability reported by the first communication apparatus.

Optionally, the group to which the first communication apparatus belongs may also be determined by a core network. After determining the group to which the first communication apparatus belongs, the core network sends group information of the first communication apparatus to the second communication apparatus.

Optionally, the first communication apparatus may report, to the second communication apparatus, whether the first communication apparatus supports a group paging capability or a partial identifier paging capability, so that the second communication apparatus determines a grouping status of the first communication apparatus. Alternatively, the second communication apparatus may indicate, in a WUR signal, whether the WUR signal includes group indication information.

It may be understood that the energy saving requirement may also be understood as a power consumption level, that is, the first communication apparatus may report a power consumption level of the first communication apparatus to the second communication apparatus.

In this embodiment of this application, the second communication apparatus may determine the group to which the first communication apparatus belongs, and indicate, by using the second indication information, the group in which the first communication is located, so that the first communication apparatus can quickly determine, based on the second indication information, the group to which the first communication apparatus belongs.

602. The second communication apparatus sends first indication information, and correspondingly, the first communication apparatus receives the first indication information.

The first communication apparatus is a communication apparatus in the first group, and the first indication information indicates the communication apparatus in the first group to receive the first message.

For example, the first indication information may occupy a small quantity of bits. For example, a quantity of bits occupied by the first indication information is less than that of the first message. For example, the first indication information may occupy 1 bit, 2 bits, or 4 bits. For example, the quantity of bits occupied by the first indication information may be determined based on a service requirement. For example, when a capacity of a WUR link is small and resources need to be saved, the first indication information may occupy 1 bit. To improve reliability of the first indication information, the first indication information may be encoded through Manchester encoding, that is, the first indication information may occupy 2 bits. To further improve reliability of the first indication information, the first indication information may occupy 4 bits. It may be understood that the quantity of bits occupied by the first indication information is merely an example, and the quantity of bits of the first indication information shown above should not be understood as a limitation on this embodiment of this application.

In a possible implementation, a value of the first indication information is a second value. For example, the first indication information indicates whether the communication apparatus in the first group receives the first message. For example, when the value of the first indication information is the second value, the first indication information indicates the communication apparatus in the first group to receive the first message; or when the value of the first indication information is a third value, the first indication information indicates the communication apparatus in the first group not to receive the first message. For example, when the first indication information occupies 1 bit, and the value of the first indication information is 1, the first indication information indicates the communication apparatus in the first group to receive the first message; or when the value of the first indication information is 0, the first indication information indicates the communication apparatus in the first group not to receive the first message. It may be understood that the value of the first indication information may be predefined in a protocol, or may be configured by the second communication apparatus. This is not limited in this application. For example, the first indication information may be a sequence predefined in a protocol or configured by the second communication apparatus.

In this embodiment of this application, a value of the second indication information can more accurately indicate the first communication apparatus to receive the first message. When the value of the second indication information is not the second value, the second indication information indicates other information, thereby improving applicability of the second indication information.

In a possible implementation, step 602 may include: The second communication apparatus sends the first indication information within a first monitoring occasion, and correspondingly, the first communication apparatus receives the first indication information within the first monitoring occasion.

It may be understood that, for the first monitoring occasion, refer to the foregoing related descriptions. Details are not described herein again.

For example, the first communication apparatus receives the first indication information on the WUR link by using a secondary receiver.

603. The first communication apparatus determines the first identifier based on the second identifier.

604. The second communication apparatus determines the first identifier based on the second identifier.

605. The second communication apparatus sends the first message, and correspondingly, the first communication apparatus receives the first message.

It may be understood that, for the first message, refer to the foregoing related descriptions. Details are not described herein again.

For example, the second communication apparatus may send the first message within the first monitoring occasion, and correspondingly, the first communication apparatus may receive the first message within the first monitoring occasion.

For example, FIG. 7 shows an example of a system frame according to an embodiment of this application. As shown in FIG. 7, a wake-up period T is 1.28 seconds, a quantity M of wake-up frames in the wake-up period is 128, and a quantity Ms of monitoring occasions included in one wake-up frame is 2. The first communication apparatus and the second communication apparatus may calculate, based on Formula (8) and Formula (9), a first wake-up frame (for example, a WUR-F 0 in FIG. 7) and a first monitoring occasion (for example, a WUR-O 0 in FIG. 7) that correspond to the first communication apparatus. The second communication apparatus may send the first indication information and the first message within the first monitoring occasion in the first wake-up frame. The first communication apparatus receives the first message after receiving the first indication information.

606. The first communication apparatus wakes up.

The first communication apparatus receives the first message, and wakes up after detecting that the first message includes the first identifier.

In a possible implementation, the method shown in FIG. 6 further includes step 607 and step 608.

607. The second communication apparatus sends third indication information, and correspondingly, the first communication apparatus receives the third indication information.

The third indication information indicates the communication apparatus in the second group to receive the paging message. For example, the group to which the first communication apparatus belongs is the first group. Therefore, the first communication apparatus may not receive the paging message. After receiving the third indication information indicating the communication apparatus in the second group to receive the paging message, the communication apparatus in the second group may wake up a main radio to receive the paging message.

It may be understood that in some implementations, the first indication information and the third indication information may be included in a same WUR signal, or the first indication information and the third indication information may be same indication information. That is, the first indication information or the third indication information indicates the communication apparatus in the first group to receive the first message, and indicates the communication apparatus in the second group to receive the paging message.

608. The second communication apparatus sends the paging message.

The paging message is used to page the communication apparatus in the second group. For example, the paging message may include a first identifier of the communication apparatus in the second group. It may be understood that, for the first identifier, refer to the foregoing related descriptions. Details are not described herein again.

In this embodiment of this application, the second communication apparatus may wake up the communication apparatus in the first group by using the first message, and wake up the communication apparatus in the second group by using the paging message. When there are a large quantity of communication apparatuses that need to be woken up, a delay of waking up the communication apparatus is reduced without being limited by a capacity of the first message. When the group to which the first communication apparatus belongs is the first group, the first indication information may indicate the first communication apparatus to receive the first message, to ensure that the first communication apparatus can receive the first message.

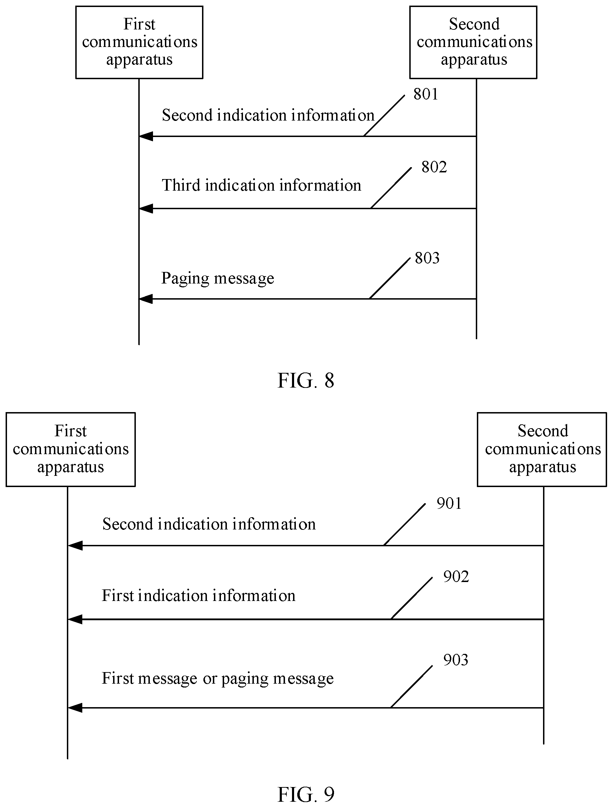

FIG. 8 is a schematic flowchart of still another communication method according to an embodiment of this application. As shown in FIG. 8, the communication method includes but is not limited to the following steps.

801. A second communication apparatus sends second indication information, and correspondingly, a first communication apparatus receives the second indication information.

The second indication information indicates a group to which the first communication apparatus belongs. For example, the second indication information indicates that the group to which the first communication apparatus belongs is a second group.

It may be understood that, for specific descriptions of the second indication information, refer to the foregoing related descriptions. Details are not described herein again.

802. The second communication apparatus sends third indication information, and correspondingly, the first communication apparatus receives the third indication information.

The third indication information indicates a communication apparatus in the second group to receive a paging message.

In some implementations, the third indication information further indicates a communication apparatus in a first group to receive a first message. That is, the third indication information indicates the communication apparatus in the first group to receive the first message, and indicates the communication apparatus in the second group to receive the paging message.

In a possible implementation, the second communication apparatus sends the third indication information within the first monitoring occasion, and correspondingly, the first communication apparatus receives the third indication information within the first monitoring occasion.

For example, the first communication apparatus monitors the third indication information on a WUR link by using a secondary receiver. After receiving the third indication information, the secondary receiver wakes up a main radio, so that the main radio receives the paging message. Optionally, after waking up the main radio, the first communication apparatus may turn off the secondary receiver.

803. The second communication apparatus sends the paging message, and correspondingly, the first communication apparatus receives the paging message.

The paging message is used to page the first communication apparatus. For example, the paging message includes an identifier of the first communication apparatus. For example, after receiving the paging message, the first communication apparatus detects whether the paging message includes a first identifier of the first communication apparatus. When the paging message includes the first identifier, the first communication apparatus determines that the first communication apparatus is paged, and enters a random access procedure.

In this embodiment of this application, the first communication apparatus may monitor the third indication information on the WUR link by using the secondary receiver. Before the secondary receiver receives the third indication information, the main radio is in an off state or a deep sleep state. After receiving the third indication information, the secondary receiver wakes up the main radio to receive the paging message, and the main radio receives the paging message. The main radio does not need to keep listening to the paging message, so that energy consumption of the first communication apparatus can be reduced.

FIG. 9 is a schematic flowchart of yet another communication method according to an embodiment of this application. As shown in FIG. 9, the communication method includes but is not limited to the following steps.

901. A second communication apparatus sends second indication information, and correspondingly, a first communication apparatus receives the second indication information, where the second indication information indicates a group to which the first communication apparatus belongs.

It may be understood that, for specific descriptions of the second indication information, refer to the foregoing related descriptions. Details are not described herein again.

902. The second communication apparatus sends first indication information, and correspondingly, the first communication apparatus receives the first indication information, where the first indication information indicates a communication apparatus in a first group to receive a first message and/or indicates a communication apparatus in a second group to receive a paging message. That is, the first indication information indicates the communication apparatus in the first group to receive the first message, indicates the communication apparatus in the second group to receive the paging message, or indicates the communication apparatus in the first group to receive the first message and indicates the communication apparatus in the second group to receive the paging message.

For example, the first communication apparatus may receive the first indication information on a WUR link by using a secondary receiver. The first communication apparatus may determine, based on the second indication information, the group to which the first communication apparatus belongs, and determine, based on the first indication information and the group to which the first communication apparatus belongs, to receive the first message or the paging message. For example, when the group to which the first communication apparatus belongs is the first group, and the first indication information indicates the communication apparatus in the first group to receive the first message, the first communication apparatus determines to receive the first message. The first communication apparatus may continue to monitor the first message on the WUR link. When the group to which the first communication apparatus belongs is the second group, and the first indication information indicates the communication apparatus in the second group to receive the paging message, the first communication apparatus determines to receive the paging message. The first communication apparatus may wake up a main radio, and the main radio monitors and receives the paging message.

It may be understood that, for specific descriptions of the first indication information, refer to the foregoing related descriptions. Details are not described herein again.

In some possible implementations, the first indication information indicates the communication apparatus in the first group to receive the first message, and the second communication apparatus may further send third indication information. Correspondingly, the first communication apparatus receives the third indication information, where the third indication information indicates the communication apparatus in the second group to receive the paging message.

It may be understood that after receiving the third indication information indicating the communication apparatus in the second group to receive the paging message, the communication apparatus in the second group may wake up the main radio to receive the paging message. Therefore, the third indication information may be understood as wake-up information of the communication apparatus in the second group.

903. The second communication apparatus sends the first message or the paging message, and correspondingly, the first communication apparatus receives the first message or the paging message.

Specifically, the second communication apparatus sends the first message or the paging message based on the group to which the first communication apparatus belongs. Correspondingly, the first communication apparatus receives the first message or the paging message based on the group to which the first communication apparatus belongs. For example, when determining that the first communication apparatus needs to be woken up, the second communication apparatus sends the first message or the paging message based on the group to which the first communication apparatus belongs.

In an implementation, when the group to which the first communication apparatus belongs is the first group, the second communication apparatus sends the first message, and correspondingly, the first communication apparatus receives the first message. The first message is used to wake up the first communication apparatus, and the first message includes a first identifier.

For example, when the group to which the first communication apparatus belongs is the first group, after determining that the first communication apparatus needs to be woken up, the second communication apparatus determines the first identifier based on a second identifier of the first communication apparatus, and wakes up the first communication apparatus by including the first identifier of the first communication apparatus in the first message.

For example, the first communication apparatus receives the first message on the WUR link by using the secondary receiver. The first communication apparatus determines the first identifier of the first communication apparatus based on the second identifier, and after receiving the first message, detects whether the first message includes the first identifier. When the first message includes the first identifier, the first communication apparatus wakes up. For example, the first communication apparatus may wake up the main radio.

For example, after waking up, the first communication apparatus enters a random access procedure. It may be understood that after waking up the main radio, the first communication apparatus directly enters the random access procedure without receiving the paging message.

It may be understood that, for specific descriptions of the first identifier and the second identifier, refer to the foregoing related descriptions. Details are not described herein again.

In another implementation, when the group to which the first communication apparatus belongs is the second group, the second communication apparatus sends the paging message, and correspondingly, the first communication apparatus receives the paging message.

For example, the first communication apparatus may monitor the paging message on a PDCCH by using the main radio. After receiving the paging message, the first communication apparatus detects whether the paging message includes an identifier of the first communication apparatus. When the paging message includes the identifier of the first communication apparatus, the first communication apparatus enters a random access procedure. Optionally, the identifier of the first communication apparatus may include a first identifier.

In this embodiment of this application, the second communication apparatus may wake up the communication apparatus in the first group by using the first message, and page the communication apparatus in the second group by using the paging message. When there are a large quantity of communication apparatuses that need to be woken up, more communication apparatuses can be simultaneously woken up without being limited by a capacity of the first message. In addition, the second communication apparatus may further indicate, by using the first indication information, the communication apparatus in the first group to receive the first message and/or indicate the communication apparatus in the second group to receive the paging message, so that the corresponding communication apparatus can receive the first message or the paging message. After receiving the first indication information, the first communication apparatus receives the first message or the paging message based on the group to which the first communication apparatus belongs, and determines, based on the first message or the paging message, whether to enter the random access procedure, to ensure that the first communication apparatus can establish communication with the second communication apparatus in a timely manner.

In this embodiment of this application, the first message may be a WUR signal or may be included in a WUR signal, the first communication apparatus may be a terminal device, and the second communication apparatus may be a network device. When sending WUR signals, the network device may send the WUR signals in different beam directions, or repeatedly send the WUR signals, to improve coverage of the WUR signal. The network device may use the WUR signal to carry indication information indicating a quantity of beam directions in which WUR signals are sent or a quantity of times that WUR signals are repeatedly sent.

In a possible implementation, the network device may first send third indication information, where the third indication information indicates a terminal device in the second group to receive the paging message and then send the first message. Because the first message carries the first identifier, and a sending time of the first message is long, the network device may first send the third indication information, so that the terminal device in the second group can receive wake-up information earlier, and wake up the main radio, to receive the paging message.

Optionally, when the network device sends the WUR signals in different beam directions or repeatedly sends the WUR signal, the network device may first send all third indication information, and then send the first message, or no other information is sent between all third indication information, so that the terminal device in the second group receives wake-up information earlier.

Optionally, there is no interval or a fixed interval between WUR signals sent in different directions or WUR signals sent repeatedly. The interval may be predefined in a protocol, or may be configured by the network device.

In this embodiment of this application, when a same WUR signal is discontinuous in time domain, a start part or an end part of discontinuous parts needs to be indicated by using a specific sequence. Alternatively, the network device needs to ensure that one WUR signal is definitely continuous in time domain. Alternatively, a minimum time unit of the WUR signal is defined, and each minimum time unit needs to be continuous. Minimum time units may be discontinuous. The minimum time unit may be predefined, or may be configured by the network device. One WUR signal may include one or more minimum time units.

Optionally, the WUR signal may carry a quantity of SSBs actually sent by a cell in a synchronization access signal group (synchronization signal burst, SS burst). In this way, when receiving the WUR signal, the terminal device may learn of an SSB sending status of the cell based on the WUR signal, to perform random access and receive a paging message.

In some implementations, the network device may further send a first WUR signal on a WUR link, where the first WUR signal includes configuration information of a second WUR signal, and the configuration information may include time domain location information and/or frequency domain location information. For example, the first WUR signal may include parameters N, M, and Ms of the second WUR signal, so that the terminal device can also learn of configuration information of the second WUR signal when the main radio is turned off. Optionally, the first WUR signal may also include configuration information of a paging signal. For example, the first WUR signal may include a quantity P of paging frames in a paging cycle and a quantity Ps of paging monitoring occasions corresponding to one paging frame, so that the terminal device can also learn of the configuration information of the paging signal when the main radio is turned off. Optionally, when the WUR signal does not include the configuration information of the paging signal, a quantity P of paging frames in a paging cycle may be equal to a quantity M of wake-up frames in a wake-up period, and a quantity Ps of paging monitoring occasions corresponding to one paging frame may be equal to a quantity Ms of monitoring occasions corresponding to one wake-up frame, that is, P=M, and Ps=Ms.

Optionally, the second WUR signal may be a WUR signal including the first message.

In a possible implementation, when the first WUR signal does not include the frequency domain location information of the second WUR signal, the second WUR signal and the first WUR signal may be located at a same frequency domain location. In this application, that frequency domain locations are the same may be understood as that bandwidths occupied in frequency domain are the same, and/or start points or center frequencies occupied by two signals in frequency domain are the same.

In another possible implementation, when the first WUR signal indicates a frequency domain location of the second WUR signal, the frequency domain location of the second WUR signal may be indicated by adding an offset value to q frequency domain location of the first WUR signal. The offset value may be indicated by the first WUR signal. A unit of the offset value may be predefined in a protocol, or may be indicated by the first WUR signal.

In still another possible implementation, the first WUR signal and the second WUR signal may be located at different frequency domain locations, to avoid mutual interference between the first WUR signal and the second WUR signal.

In yet another possible implementation, a first WUR signal of a first cell includes time domain location information and/or frequency domain location information of a first WUR signal of a second cell, so that the terminal device can quickly detect the WUR signal of the second cell after receiving the first WUR signal of the first cell. In some possible implementations, when the first WUR signal of the first cell does not include the frequency domain information of the WUR signal of the second cell, the terminal device may determine that a frequency domain location of the first WUR signal of the second cell is the same as that of the first WUR signal of the first cell. The second cell is a neighboring cell of the first cell.

Optionally, the first cell is a cell on which the terminal device camps, a cell to which the terminal device belongs when the terminal device enters an idle state or an inactive state from a connected state for the last time, or a serving cell of the terminal device.

Optionally, the first WUR signal of the first cell includes a WUR signal frame number and/or a paging (paging) frame number of the first cell and/or the second cell, so that the terminal device performs time domain synchronization.

Optionally, the first WUR signal of the first cell includes coverage information of the WUR signal of the first cell and/or the WUR signal of the second cell, so that the terminal device can determine, based on the first WUR signal, whether WUR receiving can be performed in the second cell.

Optionally, the first WUR signal of the first cell includes indication information indicating whether the neighboring cell of the first cell supports the WUR signal, so that the terminal device can determine, based on the first WUR signal, whether the neighboring cell of the first cell supports the WUR signal.

In this embodiment of this application, the terminal device may receive the WUR signal by using a WUR receiver, and after receiving the WUR signal for waking up the terminal device, the terminal device may turn off the WUR receiver, to reduce energy consumption. For an occasion of disabling the WUR receiver, this application further provides the following several examples:

Example 1: After receiving a WUR signal (for example, a first message) for waking up the terminal device, the terminal device may turn off the WUR receiver, to reduce energy consumption. Optionally, when the terminal device receives the WUR signal (for example, the first message) that includes a unique identifier of the terminal device, the terminal device may turn off the WUR receiver after receiving the WUR signal. It may be understood that the unique identifier of the terminal device may be a first identifier or a second identifier of the terminal device, but not a group identifier or a specific identifier. Optionally, if the terminal device directly performs random access without receiving a paging message after receiving the WUR signal, the terminal device may turn off the WUR receiver after receiving the WUR signal.

Example 2: After the terminal device wakes up a main radio, if the main radio can normally receive and send a signal, the terminal device may turn off the WUR receiver, to ensure that one receiver of the terminal device can work normally at all times while energy consumption is reduced, thereby avoiding missing detection of a signal of the network device.

Example 3: After receiving a WUR signal (for example, third indication information) indicating the terminal device to receive a paging message, the terminal device needs to receive the paging message. After the terminal device receives the paging message including the identifier of the terminal device, the terminal device may turn off the WUR receiver. In this implementation, after determining that the terminal device is paged by the network device, the terminal device turns off the WUR receiver. This avoids missing detection of a WUR signal, and also helps reduce energy consumption.

Example 4: The terminal device performs random access in a non-contention-based manner, and the terminal device may turn off the WUR receiver after receiving a message 2 (message 2, Msg2). The Msg2 is a random access response message carrying a PDCCH/PDSCH. When the terminal device receives the Msg2, it indicates that the network device has determined that a to-be-paged terminal device has accessed a network, and the terminal device no longer needs to send a message on a WUR link, and may no longer need to detect the WUR signal, so that energy consumption of the terminal device can be reduced.

Example 5: The terminal device performs random access in a contention-based manner, and the terminal device may turn off the WUR receiver after receiving a message 4 (message 4, Msg4). The Msg4 is an RRC configuration (RRCSetup) message, an RRC resume (RRCResume) message, or a contention resolution message. When the terminal device receives the Msg4, it indicates that the network device has determined that a to-be-paged terminal device has accessed a network, and the terminal device no longer needs to send a message on a WUR link, and no longer needs to detect the WUR signal, so that energy consumption of the terminal device can be reduced.

Example 6: An occasion on which the terminal device turns off the WUR receiver is indicated by the network device. The network device may indicate the occasion on which the terminal device turns off the WUR receiver. The occasion on which the WUR receiver is turned off may include one or more of the following: after a WUR signal including a unique identifier of the terminal device is received, when the main radio normally receives and sends a signal, after a paging message including an identifier of the terminal device is received, after a Msg2 is received, and after a Msg4 is received. That is, the network device may indicate the terminal device to turn off the WUR receiver after receiving the WUR signal including the unique identifier of the terminal device. Alternatively, the network device may indicate the terminal device to turn off the WUR receiver when the main radio of the terminal device normally receives and sends a signal. Alternatively, the network device may indicate the terminal device to turn off the WUR receiver after receiving the paging message including the identifier of the terminal device. Alternatively, the network device may indicate the terminal device to turn off the WUR receiver after receiving the Msg2. Alternatively, the network device may indicate the terminal device to turn off the WUR receiver after receiving the Msg4.

Optionally, the network device may indicate, by using one or a combination of protocol predefinition, an RRC message, a system message, a MAC CE, DCI, and a wake-up signal, an occasion on which the terminal device turns off the WUR receiver. For example, the network device may directly indicate, by using the RRC message, the system message, or the WUR signal, an occasion on which the terminal device turns off the WUR receiver. For another example, the network device may configure, by using the RRC message or the system message, a plurality of candidate occasions on which the WUR receiver is turned off, and then indicate, by using the WUR signal, one of the plurality of candidate occasions on which the WUR receiver is turned off.

In a possible implementation, the terminal device may receive the first message at a first frequency domain location, where the first frequency domain location is a frequency domain location corresponding to the terminal device in Mf frequency domain locations.

In this embodiment of this application, the network device may send the wake-up signal (for example, the first message) at different frequency domain locations. For example, the network device may send the wake-up signal at the Mf different frequency domain locations, where Mf is a positive integer. The terminal device may receive the first message at the first frequency domain location.

For example, the terminal device may determine the first frequency domain location based on the identifier of the terminal device, where the identifier of the terminal device may include any one of a first identifier, a second identifier, or a third identifier.

In this implementation, the first message may include a fourth identifier of the terminal device, and the fourth identifier identifies the terminal device in the first message. For example, the fourth identifier is a partial identifier of the first identifier, and a length of the fourth identifier is related to the quantity Mf of frequency domain locations. For example, the fourth identifier is a partial identifier obtained when $\log_2(Mf)$ bits are removed from the first identifier.

In this embodiment of this application, the network device may send the first message at the Mf different frequency domain locations, so that a quantity of terminal devices corresponding to the first message at one frequency domain location can be reduced, and the terminal device can be identified in the first message by using fewer bits. The fourth identifier includes the partial identifier of the first identifier, the length of the fourth identifier is less than the length of the first identifier, and the terminal device is identified in the first message by using the fourth identifier, so that a quantity of bits occupied by the identifier corresponding to the terminal device in the first message can be further reduced, and a capacity of the first message can be increased.

In a possible implementation, the network device may send first information of a first cell, and correspondingly, the terminal device receives the first information, where the first information may indicate whether a second cell supports sending of a WUR signal. For example, the first cell is a cell on which the terminal device camps, a cell to which the terminal device belongs when the terminal device enters an idle state or an inactive state from a connected state for the last time, or a serving cell. The second cell is a neighboring cell of the first cell. The first information may be included in any one of a system message, an RRC message, or a WUR signal.

For example, the first information may indicate, by using display signaling, whether the second cell supports sending of the WUR signal. For example, the display signaling may be 1 bit. When a value of the display signaling is 1, the display signaling indicates that the second cell supports sending of the WUR signal. When a value of the display signaling is 0, the display signaling indicates that the second cell does not support sending of the WUR signal.

For another example, the first information may indicate, based on whether WUR signal configuration information of the second cell is configured, whether the second cell supports sending of the WUR signal. For example, when the first information includes the WUR signal configuration information of the second cell, the first information indicates that the second cell supports sending of the WUR signal. When the first information does not include the WUR signal configuration information of the second cell, the first information indicates that the second cell does not support sending of the WUR signal.

For the WUR signal configuration information of the second cell, this application provides the following several examples:

Example 1: The WUR signal configuration information of the second cell may include threshold information of the WUR signal of the second cell. For example, the threshold information may include a first threshold or a second threshold. When signal quality of the WUR signal of the first cell that is measured by the terminal device is less than the first threshold, the terminal device starts to measure the WUR signal of the second cell. For another example, when signal quality of the WUR signal of the second cell that is measured by the terminal device is greater than the second threshold, the terminal device may reselect the second cell. Alternatively, the threshold information includes a third threshold. When the terminal device learns, through measurement, that signal quality of the WUR signal of the second cell is greater than the third threshold, the terminal device wakes up the main radio.

Optionally, the terminal device measures WUR signal quality of the first cell and/or the second cell, and determines, based on the WUR signal quality, a reselected cell or a camp-on cell. In an optional manner, after the terminal device determines that the reselected cell or the camp-on cell is the second cell, the terminal device may wake up the main radio, and the main radio obtains the system message of the second cell, so that the terminal device reselects the second cell or camps on the second cell.

In another optional manner, the second cell supports sending of a WUR signal, the system message of the second cell is carried in the WUR signal, and the terminal device receives the WUR signal by using the WUR receiver. It may be understood that the terminal device may not need to wake up the main radio. In this manner, the system message of the second cell can be prevented from being carried by using the first cell or the WUR signal, thereby reducing information overheads of the first cell, and reducing overheads of the WUR signal. In addition, the terminal device wakes up the main radio only after cell reselection is determined, so that a quantity of times of waking up the main radio can be reduced, thereby facilitating energy saving of the terminal device.

Optionally, the network device may notify the terminal device of a time domain location and/or a frequency domain location of an SSB and/or the system message of the second cell by using configuration information of the first cell, to enable the terminal device to quickly obtain the system message of the second cell. Optionally, the network device notifies the terminal device of a time domain location and/or a frequency domain location of an SSB and/or the system message of the second cell by using a first WUR signal of the second cell.

Example 2: The WUR signal configuration information of the second cell may include transmission rate information of the WUR signal of the second cell and/or a subcarrier spacing corresponding to the WUR signal.

Example 3: The WUR signal configuration information of the second cell may include information about a length of the identifier of the terminal device that is included in the WUR signal of the second cell, and include information about whether the length of the identifier of the terminal device is variable.

Example 4: The WUR signal configuration information of the second cell may include indication information indicating whether the terminal device receives a paging message after receiving the WUR signal of the second cell. For example, the first information may further include configuration information of the paging message of the second cell, so that the terminal device can receive the paging message based on the configuration information of the paging message.

Example 5: The WUR signal configuration information of the second cell may include priority information of the WUR signal of the second cell. The priority information is related to threshold information of the second cell. For example, when the terminal device determines whether to detect the WUR signal of the second cell, a corresponding WUR signal threshold varies with a priority. For another example, when the terminal device determines whether to reselect the second cell to detect the WUR signal, a corresponding WUR signal threshold varies with a priority.

Example 6: The WUR signal configuration information of the second cell may include indication information indicating whether the WUR signal of the second cell is sent through a plurality of beams and a corresponding quantity of beams, or include indication information indicating whether the WUR signal of the second cell is repeatedly sent and a corresponding quantity of repetition times.

Example 7: The WUR signal configuration information of the second cell may include transmit power of the WUR signal of the second cell.

It may be understood that various examples of the WUR signal configuration information of the second cell shown above may be combined with each other. For example, the WUR signal configuration information of the second cell in Example 1 may be combined with the WUR signal configuration information of the second cell in Example 2, that is, the WUR signal configuration information of the second cell may include the threshold information of the WUR signal of the second cell, the transmission rate information of the WUR signal of the second cell, and the subcarrier spacing corresponding to the WUR signal. Details are not described herein again.

In a possible implementation, the first information may include WUR signal configuration information of a plurality of second cells, and a quantity of the plurality of second cells does not exceed a fourth value. For example, the fourth value may be 4 or 8. This is because a capability limitation of the WUR receiver needs to be considered, for example, a storage capability limitation and a receiving capability limitation. The first information may be notified to the plurality of second cells in a list manner.

Optionally, the WUR signal configuration information of the second cell may be further included in configuration information needed when the main radio performs cell reselection. That is, the configuration information for cell reselection includes configuration information corresponding to the SSB (used for neighboring cell reselection of the main radio) and the WUR signal configuration information of the second cell. When the configuration information for cell reselection does not include the WUR signal configuration information of the second cell, the configuration information for cell reselection may implicitly indicate that the second cell does not support sending of the WUR signal, or does not support measurement of the WUR signal of the second cell.

When the configuration information for cell reselection includes information about a first reselection cell and information about a second reselection cell, a sum of quantities of first reselection cells and second reselection cells does not exceed a fifth value, where the first reselection cell is a cell on which cell reselection is performed by using the main radio or by measuring the SSB, and the second reselection cell is a cell on which cell reselection is performed by using the WUR receiver or by measuring the WUR signal. For example, the fifth value may be 16 or 32, to reduce implementation complexity of the terminal device.

A communication apparatus provided in an embodiment of this application is described below.

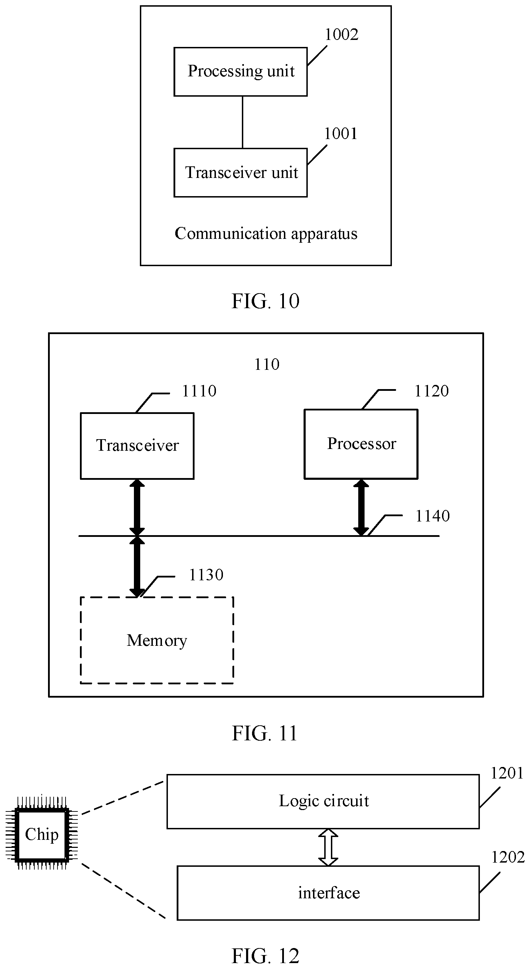

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example and is merely logical function division, and may be other division in an actual implementation. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a transceiver unit 1001 and a processing unit 1002.

In some embodiments of this application, the communication apparatus may be the first communication apparatus shown above. To be specific, the communication apparatus shown in FIG. 10 may be configured to perform steps, functions, or the like performed by the first communication apparatus in the foregoing method embodiments. For example, the first communication apparatus may be a beamformed transmit device, a chip, or the like. This is not limited in this embodiment of this application. For example, the transceiver unit 1001 may include a secondary receiver and a main radio.

The processing unit 1002 is configured to determine a first identifier based on a second identifier.

The transceiver unit 1001 is configured to receive a first message.

The processing unit 1002 is further configured to wake up the first communication apparatus.

Optionally, the transceiver unit 1001 is further configured to receive first indication information.

Optionally, the transceiver unit 1001 is further configured to receive second indication information.

Optionally, the transceiver unit 1001 is further configured to receive third indication information.

It may be understood that, for specific descriptions of the first identifier, the first message, the first indication information, the second indication information, the third indication information, and the like, refer to the related descriptions of the foregoing method embodiments, for example, the methods shown in FIG. 3, FIG. 6, FIG. 8, and FIG. 9. Details are not described herein again.

It may be understood that specific descriptions of the transceiver unit and the processing unit shown in embodiments of this application are merely examples. For specific functions, steps, or the like of the transceiver unit and the processing unit, refer to the foregoing method embodiments. Details are not described herein. For example, the transceiver unit 1001 may be further configured to perform step 303 shown in FIG. 3, step 601, step 602, and step 605 shown in FIG. 6, step 801, step 802, and step 803 shown in FIG. 8, and receiving steps in step 901, step 902, and step 903 shown in FIG. 9.

FIG. 10 is reused. In some other embodiments of this application, the communication apparatus may be the second communication apparatus shown above. To be specific, the communication apparatus shown in FIG. 10 may be configured to perform the steps, functions, or the like performed by the second communication apparatus in the foregoing method embodiments. For example, the second communication apparatus may be a beamformed receive device, a chip, or the like. This is not limited in this embodiment of this application.

The processing unit 1002 is configured to determine a first identifier based on a second identifier.

The transceiver unit 1001 is configured to send a first message.

Optionally, the transceiver unit 1001 is further configured to send first indication information.

Optionally, the transceiver unit 1001 is further configured to send second indication information.

Optionally, the transceiver unit 1001 is further configured to send third indication information.

It may be understood that, for specific descriptions of the second identifier, the first identifier, the first message, the first indication information, the second indication information, the third indication information, and the like, refer to the related descriptions of the foregoing method embodiments, for example, the methods shown in FIG. 3, FIG. 6, FIG. 8, and FIG. 9. Details are not described herein again.

It may be understood that specific descriptions of the transceiver unit and the processing unit shown in embodiments of this application are merely examples. For specific functions, steps, or the like of the transceiver unit and the processing unit, refer to the foregoing method embodiments. Details are not described herein. For example, the transceiver unit 1001 may be further configured to perform step 303 shown in FIG. 3, step 601, step 602, and step 605 shown in FIG. 6, step 801, step 802, and step 803 shown in FIG. 8, and sending steps in step 901, step 902, and step 903 shown in FIG. 9.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 10 or any form of product having a function of the second communication apparatus in FIG. 10 falls within the protection scope of embodiments of this application. It should be further understood that the following description is merely an example, and the product forms of the first communication apparatus and the second communication apparatus in embodiments of this application are not limited thereto.

In the communication apparatus shown in FIG. 10, the processing unit 1002 may be one or more processors, and the transceiver unit 1001 may be a transceiver. Alternatively, the transceiver unit 1001 may be a sending unit and a receiving unit, the sending unit may be a transmitter, and the receiving unit may be a receiver. The sending unit and the receiving unit are integrated into one device, for example, a transceiver. Alternatively, the processing unit 1002 may be one or more processors (or the processing unit 1002 may be one or more logic circuits), and the transceiver unit 1001 may be an input/output interface, or the transceiver unit 1001 may be an input interface and an output interface. The input interface and the output interface may be integrated into one unit, for example, an input/output interface. Details are described below.

In a possible implementation, in the communication apparatus shown in FIG. 10, the processing unit 1002 may be one or more processors, and the transceiver unit 1001 may be a transceiver. In embodiments of this application, the processor and the transceiver may be coupled, or the like. A manner of connecting the processor and the transceiver is not limited in embodiments of this application.

As shown in FIG. 11, the communication apparatus 110 includes one or more processors 1120 and a transceiver 1110.

For example, when the communication apparatus is configured to perform the steps, the methods, or the functions performed by the first communication apparatus, the processor 1120 is configured to: determine a first identifier based on a second identifier, and wake up a first communication apparatus; and the transceiver 1110 is configured to receive a first message. Optionally, the transceiver 1110 is further configured to receive first indication information. Optionally, the transceiver 1110 is further configured to receive second indication information. Optionally, the transceiver 1110 is further configured to receive third indication information and the like.

For example, when the communication apparatus is configured to perform the steps, the methods, or the functions performed by the second communication apparatus, the processor 1120 is configured to determine a first identifier based on a second identifier; and the transceiver 1110 is configured to send a first message. Optionally, the transceiver 1110 is further configured to send first indication information. Optionally, the transceiver 1110 is further configured to send second indication information. Optionally, the transceiver 1110 is further configured to send third indication information. Optionally, the transceiver 1110 is further configured to send a paging message and the like.

It may be understood that, for specific descriptions of the first identifier, the second identifier, the first message, the first indication information, the second indication information, the third indication information, the paging message, and the like, refer to the related descriptions of the foregoing method embodiments, for example, the methods shown in FIG. 3, FIG. 6, FIG. 8, and FIG. 9. Details are not described herein again.

It may be understood that for specific descriptions of the processor and the transceiver, refer to the descriptions of the processing unit, the sending unit, and the receiving unit shown in FIG. 10. Details are not described herein again.

In various implementations of the communication apparatus shown in FIG. 11, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 110 may further include one or more memories 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. Optionally, at least one of the one or more memories may be included in the processor.

A specific connection medium between the transceiver 1110, the processor 1120, and the memory 1130 is not limited in this embodiment of this application. In this embodiment of this application, the memory 1130, the processor 1120, and the transceiver 1110 are connected through a bus 1140 in FIG. 11. The bus is represented by using a thick line in FIG. 11. A manner of connecting other components is merely an example for description, and is not limited thereto. The bus may be classified into an address bus, a data bus, a control bus, and the like. For ease of representation, only one thick line is for representing the bus in FIG. 11, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or perform the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

The processor 1120 is mainly configured to: process a communication protocol and communication data, control the entire communication apparatus, execute a software program, and process data of the software program. The memory 1130 is mainly configured to store the software program and data. The transceiver 1110 may include a control circuit and an antenna. The control circuit is mainly configured to: perform conversion between a baseband signal and a radio frequency signal and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user, and output data to the user.

After the communication apparatus is powered on, the processor 1120 may read the software program in the memory 1130, interpret and execute instructions of the software program, and process data of the software program. When data needs to be sent in a wireless manner, the processor 1120 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1120. The processor 1120 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 11, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 10, the processing unit 1002 may be one or more logic circuits, and the transceiver unit 1001 may be an input/output interface. The input/output interface is also referred to as a communication interface, an interface circuit, an interface, or the like. As shown in FIG. 12, a communication apparatus shown in FIG. 12 includes a logic circuit 1201 and an interface 1202. That is, the processing unit 1002 may be implemented through the logic circuit 1201, and the transceiver unit 1001 may be implemented through the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes a logic circuit 1201 and an interface 1202.

In this embodiment of this application, the logic circuit and the interface may alternatively be coupled to each other. A specific manner of connecting the logical circuit and the interface is not limited in this embodiment of this application.

For example, when the communication apparatus is configured to perform the methods, the functions, or the steps performed by the first communication apparatus, the logic circuit 1201 is configured to: determine a first identifier, and wake up the first communication apparatus; and the interface 1202 is configured to input a first message. Optionally, the interface 1202 is further configured to input first indication information. Optionally, the interface 1202 is further configured to input second indication information. Optionally, the interface 1202 is further configured to input third indication information.

For example, when the communication apparatus is configured to perform the methods, the functions, or the steps performed by the second communication apparatus, the logic circuit 1201 is configured to determine a first identifier; and the interface 1202 is configured to output a first message. Optionally, the interface 1202 is further configured to output first indication information. Optionally, the interface 1202 is further configured to output second indication information. Optionally, the interface 1202 is further configured to output third indication information.

It may be understood that the communication apparatus shown in embodiments of this application may implement the methods provided in embodiments of this application in a form of hardware, or may implement the methods provided in embodiments of this application in a form of software. This is not limited in embodiments of this application.

It may be understood that, for specific descriptions of the first identifier, the first message, the first indication information, the second indication information, the third indication information, and the like, refer to the related descriptions of the foregoing method embodiments, for example, the methods shown in FIG. 3, FIG. 6, FIG. 8, and FIG. 9. Details are not described herein again.

For specific implementations of embodiments shown in FIG. 12, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (as shown in FIG. 3, FIG. 6, FIG. 8, FIG. 9, and the like).

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are performed.

This application further provides a computer program product. The computer program product includes computer code or a computer program. When the computer code or the computer program is run on a computer, operations and/or processing performed by the second communication apparatus in the methods provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, and each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a first communication apparatus, a first identifier based on a second identifier, wherein a length of the first identifier is less than a length of the second identifier, and the second identifier is an identifier of the first communication apparatus;
   receiving, by the first communication apparatus, a first message, wherein the first information comprises the first identifier; and
   waking up the first communication apparatus.

2. The method according to claim 1, wherein the determining, by a first communication apparatus, a first identifier based on a second identifier comprises:
   determining, by the first communication apparatus, the first identifier based on a first partial identifier of the second identifier, wherein the first partial identifier is a partial identifier of the second identifier.

3. The method according to claim 2, wherein a difference between lengths of the first partial identifier and the second identifier is a first length, and the first length is related to a quantity of monitoring occasions in a wake-up period.

4. The method according to claim 3, wherein the first length satisfies: L=log2(N), wherein L is the first length, log2 is a logarithmic operation, and N is the quantity of monitoring occasions in the wake-up period.

5. The method according to claim 4, wherein N satisfies: N=M*Ms, wherein M is a quantity of wake-up frames in the wake-up period, and Ms is a quantity of monitoring occasions comprised in one wake-up frame.

6. The method according to any one of claims 3 to 5, wherein the first partial identifier is most significant (S-H) bits of the second identifier, S is the length of the second identifier, H is less than or equal to the first length, and S and H are positive integers.

7. The method according to any one of claims 2 to 6, wherein the determining, by the first communication apparatus, the first identifier based on a first partial identifier of the second identifier comprises:

   determining, by the first communication apparatus, the first identifier based on a frame check sequence of the first partial identifier;
   determining, by the first communication apparatus, the first identifier based on the first partial identifier and a random function; or
   determining, by the first communication apparatus, the first identifier based on the first partial identifier and a hash function.

8. The method according to claim 7, wherein the first identifier comprises K bits, values of the K bits are a first value, and K is a positive integer.

9. The method according to claim 8, wherein the K bits meet at least one or more of the following:

   K is related to a quantity of hash functions or random functions; and
   locations of the K bits in the first message are determined based on an output value of the hash function or the random function.

10. The method according to any one of claims 1 to 9, wherein before the receiving, by the first communication apparatus, a first message, the method further comprises:
receiving, by the first communication apparatus, first indication information, wherein the first indication information indicates a communication apparatus in a first group to receive the first message, and the first communication apparatus belongs to the first group.

11. The method according to claim 10, wherein before the receiving, by the first communication apparatus, first indication information, the method further comprises:
receiving, by the first communication apparatus, second indication information, wherein the second indication information indicates the group to which the first communication apparatus belongs.

12. The method according to any one of claims 1 to 11, wherein the method further comprises:
receiving, by the first communication apparatus, third indication information, wherein the third indication information indicates a communication apparatus in a second group to receive a paging message, and the first communication apparatus does not belong to the second group.

13. The method according to any one of claims 1 to 12, wherein the receiving, by the first communication apparatus, a first message comprises:

determining, by the first communication apparatus, a first monitoring occasion; and
receiving, by the first communication apparatus, the first message within the first monitoring occasion.

14. The method according to claim 13, wherein the determining, by the first communication apparatus, a first monitoring occasion comprises:
determining, by the first communication apparatus, the first monitoring occasion based on a third identifier, wherein the third identifier is determined based on the second identifier.

15. The method according to any one of claims 1 to 14, wherein the second identifier comprises any one of a 5G system temporary mobile subscriber identifier 5G-S-TMSI, a 5G temporary mobile subscriber identifier 5G-TMSI, an inactive radio network temporary identifier I-RNTI, an international mobile subscriber identity, and a short I-RNTI.

16. A communication method, comprising:

determining, by a second communication apparatus, a first identifier based on a second identifier, wherein a length of the first identifier is less than a length of the second identifier, and the second identifier is an identifier of a first communication apparatus; and
sending, by the second communication apparatus, a first message, wherein the first message is used to wake up the first communication apparatus, and the first message comprises the first identifier.

17. The method according to claim 16, wherein the determining, by a second communication apparatus, a first identifier based on a second identifier comprises:
determining, by the second communication apparatus, the first identifier based on a first partial identifier of the second identifier, wherein the first partial identifier is a partial identifier of the second identifier.

18. The method according to claim 17, wherein a difference between lengths of the first partial identifier and the second identifier is less than or equal to a first length, and the first length is related to a quantity of monitoring occasions in a wake-up period.

19. The method according to claim 18, wherein the first length satisfies: $L=\log2(N)$, wherein L is the first length, log2 is a logarithmic operation, and N is the quantity of monitoring occasions in the wake-up period.

20. The method according to claim 19, wherein N satisfies: $N=M*Ms$, wherein M is a quantity of wake-up frames in the wake-up period, and Ms is a quantity of monitoring occasions comprised in one wake-up frame.

21. The method according to any one of claims 18 to 20, wherein the first partial identifier is most significant (S-H) bits of the second identifier, S is the length of the second identifier, H is less than or equal to the first length, and H is a positive integer.

22. The method according to any one of claims 17 to 21, wherein the determining, by the second communication apparatus, the first identifier based on a first partial identifier of the second identifier comprises:

determining, by the second communication apparatus, the first identifier based on a frame check sequence of the first partial identifier;
determining, by the second communication apparatus, the first identifier based on the first partial identifier and a random function; or
determining, by the second communication apparatus, the first identifier based on the first partial identifier and a hash function.

23. The method according to claim 22, wherein the first identifier comprises K bits, values of the K bits are a first value, and K is a positive integer.

24. The method according to claim 23, wherein the K bits meet at least one or more of the following:

K is related to a quantity of hash functions or random functions; and
locations of the K bits in the first message are determined based on an output value of the hash function or the random function.

25. The method according to any one of claims 16 to 24, wherein the first communication apparatus is a communication apparatus in a first group, and before the sending, by the second communication apparatus, a first message, the method further comprises:
sending, by the second communication apparatus, first indication information, wherein the first indication information indicates a communication apparatus in the first group to receive the first message.

26. The method according to claim 25, wherein before the sending, by the second communication apparatus, first indication information, the method further comprises:
sending, by the second communication apparatus, second indication information, wherein the second indication information indicates the group to which the first communication apparatus belongs.

27. The method according to any one of claims 16 to 26, wherein the method further comprises:

sending, by the second communication apparatus, third indication information, wherein the third indication information indicates a communication apparatus in a second group to receive a paging message; and
sending, by the second communication apparatus, the paging message.

28. The method according to any one of claims 16 to 27, wherein the sending, by the second communication apparatus, a first message comprises:

determining, by the second communication apparatus, a first monitoring occasion; and
sending, by the second communication apparatus, the first message within the first monitoring occasion.

29. The method according to claim 28, wherein the determining, by the second communication apparatus, a first monitoring occasion comprises:
determining, by the second communication apparatus, the first monitoring occasion based on a third identifier, wherein the third identifier is determined based on the second identifier.

30. The method according to any one of claims 16 to 29, wherein the second identifier comprises any one of a 5G system temporary mobile subscriber identifier 5G-S-TMSI, a 5G temporary mobile subscriber identifier 5G-TMSI, an inactive radio network temporary identifier I-RNTI, an international mobile subscriber identity, and a short I-RNTI.

31. A first communication apparatus, comprising:

a processing unit, configured to determine a first identifier based on a second identifier, wherein a length of the first identifier is less than a length of the second identifier, and the second identifier is an identifier of the first communication apparatus; and

a transceiver unit, configured to receive a first message, wherein the first message comprises the first identifier, wherein
the processing unit is further configured to wake up the first communication apparatus.

32. A second communication apparatus, comprising:

a processing unit, configured to determine a first identifier based on a second identifier, wherein a length of the first identifier is less than a length of the second identifier, and the second identifier is an identifier of a first communication apparatus; and
a transceiver unit, configured to send a first message, wherein the first message is used to wake up the first communication apparatus, and the first message comprises the first identifier.

33. A communication apparatus, comprising a processor and a memory, wherein

the memory is configured to store computer-executable instructions; and
the processor is configured to execute the computer-executable instructions, so that the method according to any one of claims 1 to 15 is performed, or the method according to any one of claims 16 to 30 is performed.

34. A communication apparatus, comprising a logic circuit and an interface, wherein the logic circuit is coupled to the interface; and
the interface is configured to: input and/or output code instructions, and the logic circuit is configured to execute the code instructions, so that the method according to any one of claims 1 to 15 is performed, or the method according to any one of claims 16 to 30 is performed.

35. A computer-readable storage medium, wherein the computer-readable storage medium is configured to store a computer program, and when the computer program is executed, the method according to any one of claims 1 to 15 is performed, or the method according to any one of claims 16 to 30 is performed.

36. A communication system, comprising a first communication apparatus and a second communication apparatus, wherein the first communication apparatus is configured to perform the method according to any one of claims 1 to 15, and the second communication apparatus is configured to perform the method according to any one of claims 16 to 30.

37. A computer program product, wherein the computer program product comprises a computer program or computer code, and when the computer program product runs on a computer, the method according to any one of claims 1 to 15 is performed, or the method according to any one of claims 16 to 30 is performed.

FIG. 1

FIG. 2A

FIG. 2B

| First communications apparatus | | Second communications apparatus |

Determine a first identifier based on a second identifier   301

Determine the first identifier based on the second identifier   302

First message   303

The first communication apparatus wakes up   304

FIG. 3

| T |

| WUR-F 0 | WUR-F 1 | ... | WUR-F 8 |

| WUR-O 0 | WUR-O 1 |

FIG. 4

| 0 | 1 | 0 | 0 | 1 | 0 | 0 | 0 | 1 | 0 | 0 | 0 |

UE 1

FIG. 5

First
communications
apparatus

Second
communications
apparatus

Second indication
information → 601

First indication
information → 602

Determine a first
identifier based on
a second identifier → 603

Determine the first
identifier based on the
second identifier → 604

First message → 605

The first communication
apparatus wakes up → 606

Third indication
information → 607

Send a paging
message → 608

FIG. 6

T=1.28 s

| WUR-F 0 | WUR-F 1 | ... | WUR-F 127 |

| WUR-O 0 | WUR-O 1 |

| First indication information | First message |

FIG. 7

First communications apparatus

Second communications apparatus

Second indication information / 801

Third indication information / 802

Paging message / 803

FIG. 8

First communications apparatus

Second communications apparatus

Second indication information / 901

First indication information / 902

First message or paging message / 903

FIG. 9

1002

Processing unit

1001

Transceiver unit

Communication apparatus

FIG. 10

110

1110

Transceiver

1120

Processor

1140

1130

Memory

FIG. 11

1201

Logic circuit

Chip

1202

interface

FIG. 12

# EP 4 546 934 A1

## INTERNATIONAL SEARCH REPORT

| | International application No. |
|---|---|
| | **PCT/CN2023/099368** |

### A. CLASSIFICATION OF SUBJECT MATTER

H04W 76/11(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 唤醒, 寻呼, 短, 标识, 标志, 组, 低功耗, 监测, 时机, 周期, wake-up, page, short, identity, flag, group, low power, monitoring, occasion, period

### C. DOCUMENTS CONSIDERED TO BE RELEVANT

| Category* | Citation of document, with indication, where appropriate, of the relevant passages | Relevant to claim No. |
|---|---|---|
| X | CN 111727641 A (TELEFONAKTIEBOLAGET LM ERICSSON (PUBL)) 29 September 2020 (2020-09-29) description, paragraphs [0002]-[0200] | 1, 2, 7-17, 22-37 |
| A | CN 110881210 A (KT CORP.) 13 March 2020 (2020-03-13) entire document | 1-37 |
| A | CN 111436116 A (VIVO COMMUNICATION TECHNOLOGY CO., LTD.) 21 July 2020 (2020-07-21) entire document | 1-37 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 August 2023** | **27 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/099368**

| Patent document cited in search report | | | Publication date (day/month/year) | Patent family member(s) | Publication date (day/month/year) |
|---|---|---|---|---|---|
| CN | 111727641 | A | 29 September 2020 | None | |
| CN | 110881210 | A | 13 March 2020 | None | |
| CN | 111436116 | A | 21 July 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210822488